(19) **Europäisches Patentamt · European Patent Office · Office européen des brevets**

(11) **EP 4 423 900 B1**

(12) **FASCICULE DE BREVET EUROPÉEN**

(45) Date de publication et mention
de la délivrance du brevet:
**08.07.2026 Bulletin 2026/28**

(21) Numéro de dépôt: **22805918.4**

(22) Date de dépôt: **25.10.2022**

(51) Classification Internationale des Brevets (IPC):
*H02P 1/46* *(2006.01)* *H02P 6/16* *(2016.01)*
*H02P 6/17* *(2016.01)* *H02P 6/20* *(2016.01)*
*H02P 25/026* *(2016.01)* *H02P 25/03* *(2016.01)*

(52) Classification Coopérative des Brevets (CPC):
**H02P 1/46; H02P 6/16; H02P 6/17; H02P 6/20;
H02P 25/026; H02P 25/03;** H02P 2203/03

(86) Numéro de dépôt international:
**PCT/FR2022/052026**

(87) Numéro de publication internationale:
**WO 2023/073317 (04.05.2023 Gazette 2023/18)**

(54) **PROCÉDÉ DE CALAGE AUTOMATIQUE D'UN CAPTEUR DE POSITION ANGULAIRE**

VERFAHREN ZUM AUTOMATISCHEN EINSTELLEN EINES DREHWINKELSENSORS

METHOD FOR AUTOMATICALLY SETTING AN ANGULAR POSITION SENSOR

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **27.10.2021 FR 2111412**

(43) Date de publication de la demande:
**04.09.2024 Bulletin 2024/36**

(73) Titulaire: **Safran Electrical & Power
31702 Blagnac (FR)**

(72) Inventeur: **ROUHANA, Najib
77550 Moissy-Cramayel (FR)**

(74) Mandataire: **Cabinet Camus Lebkiri
25 rue de Maubeuge
75009 Paris (FR)**

(56) Documents cités:
**WO-A1-2011/144457**

## Description

### DOMAINE TECHNIQUE DE L'INVENTION

Le domaine technique de l'invention est celui des moteurs électriques synchrones multi-phasées d'une machine électrique tournantes d'un propulseur d'un aéronef pourvues d'un capteur de position angulaire permettant de mesurer une position angulaire d'un rotor induit à aimant par rapport à un stator.

La présente invention concerne plus particulièrement le calage automatique de ce capteur, par exemple un résolveurou un capteur à effet hall ainsi que les boucles de régulation associées pour commander la machine électrique via un convertisseur onduleur.

### ARRIERE-PLAN TECHNOLOGIQUE DE L'INVENTION

Une machine électrique est équipée d'un stator inducteur comprenant des enroulements et d'un rotor comprenant un corps induit et un arbre de rotation sur lequel est monté un capteur de position tel qu'un résolveur ou à effet hall. Le capteur de position angulaire comprend une partie fixe et une partie mobile monté sur l'arbre du rotor de la machine électrique qui produit à la sortie un ensemble de signaux électriques dont les caractéristiques d'amplitude relative reflètent instantanément la position angulaire du rotor de la machine.

Dans une machine électrique auto pilotée, ce signal est utilisé pour asservir le courant dans les enroulements du stator inducteur au maintien d'un écart angulaire optimum (typiquement en quadrature) entre le champ magnétique tournant dans le stator et le champ magnétique engendré entre les pôles du rotor.

Lorsque le couple est très élevé, il peut arriver que l'arbre rotor glisse par rapport au corps de rotor. Le réglage initial angulaire du capteur angulaire est en conséquence modifié. En outre la partie mobile du capteur angulaire peut elle aussi glisser sur l'arbre rotor entraînant un décalage de la position angulaire.

Ce décalage entraîne un disfonctionnement de la commande de la machine électrique. En effet, dans une machine synchrone, par exemple triphasée, à aimants permanents, le couple produit dépend de l'interaction entre le flux rotorique et le flux statorique. Le flux rotorique étant produit par les aimants permanents, on règle le couple par le réglage du flux statorique pour lequel deux paramètres sont accessibles: l'amplitude du flux, réglée elle-même par l'amplitude des courants du système triphasé d'alimentation, et la phase du flux statorique par rapport au flux rotorique. Cette phase est elle-même réglée par la phase des courants statoriques. A amplitude courant donnée, le couple maximum est obtenu lorsque le flux rotorique est, à peu de chose près, en quadrature de phase par rapport au flux statorique. L'amplitude des courants est asservie grâce à des régulateurs qui utilisent les mesures de capteurs de courant.

Pour pouvoir régler exactement la phase des courants statoriques, il est donc nécessaire d'avoir un capteur de position du rotor moteur pour connaitre la position angulaire du rotor (donc du flux rotorique) par rapport au bobinage statorique. C'est la fonction du capteur de position permettant de mesurer la position absolue de sa partie mobile et si aucun glissement entre la partie mobile du capteur et les pôles du rotor, la position angulaire du rotor de la machine. Une position de référence donnée entre rotor machine et stator machine correspond une valeur de référence, par exemple « zéro degré », pour la mesure de la position rotorique par le capteur de position. Pour le pilotage de la machine électrique et par convention, la référence angulaire « zéro degré » de la position absolue du rotor de la machine sur un tour électrique intervient lorsque les pôles rotoriques de la machine sont alignés sur les axes respectifs du bobinage d'une phase A, c'est-à-dire l'une des phases du stator, dont on connaît bien évidemment la position spatiale par la construction des bobinages.

Dans le cas d'un glissement entre la partie mobile du capteur de position et la partie active du rotor, il existe une différence entre l'indication de la mesure du capteur de position et la valeur de référence de la position rotorique. Appelons cette différence « erreur de calage du capteur de position ».

Il est donc nécessaire de connaître cette erreur de calage du capteur de position pour connaître exactement la position du flux rotorique machine et donc pouvoir optimiser le pilotage de la machine.

Il est connu du document WO2011144457A1 un équipement comprenant une première unité de calcul pour réaliser une transformée de Park inverse à partir des tensions en sortie des régulateurs de courant PI, délivrant des signaux de consigne de tension électrique dans un étage de puissance. L'étage de puissance génère un système de tension triphasé pour alimenter la machine électrique. L'équipement comprend une unité de traitement de signal qui fournit une mesure d'angle. Une deuxième unité de calcul utilise les courants de phase et l'angle du rotor pour produire des valeurs de sortie (utilisées par la première unité de calcul. Un contrôleur de tension PI génère un angle pour ajuster l'erreur de réglage en ajustant une valeur définie pour la tension.

Une solution est d'avoir un procédé de recherche d'erreur de position en position statique consistant à injecter un courant constant par exemple dans deux phases du bobinage statorique. La machine électrique synchrone doit être à vide, c'est-à-dire que le rotor de la machine électrique doit être découplé du corps du propulseur de la turbomachine permettant au rotor libre en rotation de prendre une position d'équilibre bien définie, le flux rotorique des aimants s'alignant naturellement avec le flux statorique produit donc une position angulaire prédéterminée connue entre le rotor et le stator. Le capteur de position mesure et transmet la position angulaire mesurée et une unité de calcul peut ainsi comparer la position angulaire mesurée avec la position angulaire prédéterminée à cette position d'équilibre du rotor, et en déduire l'erreur de mesure de position angulaire entre cette mesure de position angulaire et la position angulaire prédéterminée. L'unité de calcul peut ainsi calculer en mode de fonctionnement normal de la machine électrique, un angle ajusté en décalant l'angle mesuré par le capteur de position de cette erreur de position angulaire.

Ce procédé de recherche d'erreur de position en position statique présente l'inconvénient d'injecter des courants statiques dans le stator à forte amplitude pour permettre au rotor de tourner afin d'obtenir la position angulaire rotorique connue (de référence), entraînant un échauffement du bobinage et des interrupteurs électroniques de puissance important au cours de la procédure de recherche d'erreur pouvant détériorer plusieurs éléments (électronique, interrupteurs électroniques de puissance, bobinage, aimant du rotor) de la machine électrique. En outre pour une machine multipolaire à p paires de pôles, il y a p tours électriques par tour mécanique, il y a donc autant de positions d'équilibre angulaire connu que de paires de pôles en alimentant les deux phases. Il peut donc être nécessaire en outre de réaliser plusieurs fois ce procédé de recherche d'erreur de position en position statique en alimentant par exemple d'autres phases ou recommencer la même alimentation des deux phases pour vérifier l'erreur de position angulaire. Il est donc nécessaire de réaliser plusieurs fois le procédé de recherche d'erreur de position en position statique, pour plusieurs positions, entraînant un procédé très long.

L'objectif de l'invention est de corriger l'erreur de calage du capteur de position de façon simple, plus rapide et en diminuant le risque de détérioration des différents éléments de la machines (interrupteurs électroniques, bobinage etc.).

**RESUME DE L'INVENTION**

L'invention est définie dans les revendications indépendantes 1 et 11 et les modes de réalisation préférés dans les revendications dépendantes.

L'invention offre une solution aux problèmes évoqués précédemment, en permettant d'estimer dans des conditions bien particulières, tout en ayant le rotor tournant, la position angulaire à un instant t du rotor par rapport au stator et comparer cette position angulaire estimée avec la position angulaire mesurée par le capteur de position pour identifier et corriger le décalage angulaire ayant entraîné l'erreur de calage du capteur de position.

Un aspect de l'invention concerne un procédé de calage automatique d'un capteur de position angulaire mesurant un angle correspondant à la position angulaire mécanique d'un rotor induit à aimant formant P paires de pôles par rapport à un stator comprenant X phases d'un moteur électrique synchrone multi-phasée d'une machine électrique d'un propulseur d'un aéronef, le capteur de position comprenant une partie mobile montée sur le rotor induit et une partie fixe par rapport au stator, le procédé utilisant une boucle de régulation pour transmettre une commande à un convertisseur onduleur de la machine électrique pour alimenter les phases du stator, la boucle de régulation comprenant un régulateur de courant comprenant une entrée de consigne pour recevoir une consigne de courant comprenant un courant quadratique comprenant une composante sur l'axe quadratique du vecteur courant de consigne et un courant direct correspondant à une composante sur l'axe direct du vecteur courant de consigne et un courant direct de consigne pour délivrer une consigne de tension comprenant une composante sur l'axe directe du vecteur tension et une composante sur l'axe quadratique du vecteur tension, une unité de calcul de Park direct et de Park inversé, permettant de transformer la consigne de tension en commande du convertisseur onduleur, le procédé étant caractérisé en ce qu'il comprend une partie d'identification d'erreur du capteur de position par la vitesse dont une partie est réalisée par un compensateur d'erreur d'angle, comprenant les étapes suivantes :

- calculer la commande du convertisseur onduleur afin de faire tourner le rotor induit à une vitesse prédéterminée mécanique de façon constante,

- mesurer les courants des phases et les transformer dans un repère de Park, en courant quadratique de retour et en courant direct de retour, en prenant en compte un angle ajusté calculé,

- calculer une vitesse électrique du rotor en multipliant le nombre p de paires de pôles par la vitesse prédéterminée mécanique,

- calculer une consigne de tension pendant une période t dans laquelle le rotor tourne à la vitesse prédéterminée mécanique en imposant une valeur de courant direct égale à 0 au régulateur de courant,

- Identifier une erreur de décalage de la composante direct sur son axe direct en comparant, pendant la période t, la tension directe de la consigne de tension à une valeur de signe inverse, la valeur étant égale à la vitesse électrique calculée multipliée par une inductance quadratique multipliée par le courant quadratique de retour,

- Identifier une erreur de décalage de la composante quadratique sur son axe quadratique en comparant, pendant la période t, la tension quadratique de la consigne de tension à une première valeur égale à la vitesse électrique du rotor calculé multiplié par une valeur prédéterminée correspondant au flux des aimants rotoriques,

- calculer une valeur de différence angulaire à partir de ces erreurs de décalage angulaire direct et quadratique identifiés,

- déterminer à la période t, un angle ajusté en fonction de la valeur de différence angulaire calculée, et la valeur de l'angle mesuré,

- transmettre le courant quadratique de retour et le courant direct de retour selon l'angle ajusté au régulateur de courant.

Grâce à l'invention, le procédé propose une loi de commande qui identifie la présence d'une erreur entre la position angulaire réelle du rotor de la machine électrique et entre la position angulaire qui est utilisée dans la boucle de régulation des courants de la machine électrique dans une condition où le courant direct de consigne est égale à zéro.

En effet, quand le courant direct est égal à zéro, et si le capteur de position ne comporte pas d'erreur de positionnement de son angle zéro par rapport au rotor, la tension directe à la sortie du régulateur $V_{d'}$ comprend une valeur égale à $-\omega_{elec}L_q i_q$ et $V_{q'}$ comprend une valeur égale à $\omega_{elec}\varphi_f$. Ainsi en imposant la composante du vecteur courant sur l'axe directe du courant notée $i_d$ comme égal à zéro, s'il y a un décalage de mesure de positionnement entre le capteur et le rotor, la position angulaire n'a aucun impact sur le couple moteur, le couple moteur est donc piloter par la composante du vecteur courant sur l'axe quadrature, notée $i_q$. Le fait d'imposer le courant direct égal à 0 au régulateur permet donc en cas d'une erreur de mesure, d'identifier l'erreur de positionnement et d'ajuster le positionnement pour faire converger la composante sur l'axe directe du vecteur tension vers sa valeur réelle égale à $-\omega_{elec}L_q i_q$ et converger la composante sur l'axe en quadrature du vecteur tension $V_{q'}$ vers sa valeur réelle $\omega_{elec}\varphi_f$.

En outre un tel procédé fonctionne dans les deux sens de rotation de la machine électrique, que ce soit dans le sens trigonométrique positif ou négatif (sens horaire).

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :

Selon un mode de réalisation le capteur de positon est un résolveur.

Selon un autre mode de réalisation le capteur de positon est un capteur à effet hall.

Selon un mode de réalisation, la valeur de différence angulaire ($\Delta\theta$) est calculée selon cette formule :

$$\Delta\theta = \frac{1}{2}\left[\left(k_p + \frac{k_i}{s}\right)\varepsilon_d + \left(k_p + \frac{k_i}{s}\right)\varepsilon_q\right]$$

- avec $\varepsilon_d = \omega_{elec}L_q i_q + V_{d'}$ correspondant à la comparaison pour identifier l'erreur angulaire de la composante direct et $\varepsilon_q = -\omega_{elec}\varphi_f + V_{q'}$, correspondant à la comparaison pour identifier l'erreur angulaire de la composante quadratique, Lq est l'inductance quadratique, k_p,k_i sont les gains du correcteur de type proportionnel intégrale utilisée pour annuler l'erreur entre respectivement le courant quadratique de consigne et le courant quadratique retour et le courant direct de consigne et le courant direct retour.

Selon un mode de réalisation, le rotor est couplé à un arbre du propulseur comprenant un couple d'inertie, dans lequel pendant la période t, la valeur de la tension directe est imposée pour être égale à 0.

Selon un mode de réalisation, le rotor est couplé à un corps d'une turbomachine, et en ce que la partie d'étalonnage du capteur de position par la vitesse est recommencée selon un nombre X fois à différentes vitesses prédéterminées et en ce que à chaque fois qu'une partie d'étalonnage du capteur de position par la vitesse est réalisée, on enregistre la valeur de différence angulaire entre l'angle ajusté et l'angle mesuré et la vitesse prédéterminée correspondante.

- Selon un exemple de ce mode de réalisation, la première vitesse mécanique prédéterminée est la vitesse la plus grande des vitesses prédéterminées, par exemple la vitesse maximum de rotation du rotor, et en ce que le procédé recommence la partie d'étalonnage du capteur de position par la vitesse en diminuant la vitesse mécanique du rotor selon un écart prédéterminé jusqu'à l'arrêt en rotation du rotor.

Selon un autre mode de réalisation que le précédent, la machine électrique peut tourner à vide, par exemple en se débrayant d'un arbre de turbomachine, le procédé comprend :

- dans l'étape de calcul d'une commande du convertisseur onduleur de la partie d'identification d'erreur du capteur de position par la vitesse, la vitesse de rotation prédéterminée mécanique est incrémentée de façon prédéterminée à chaque fois que le procédé recommence la partie d'identification d'erreur du capteur de position par la vitesse,

- dans la partie d'identification d'erreur du capteur de position par la vitesse , une étape d'enregistrement de chaque valeur de différence angulaire entre la valeur de l'angle ajusté calculée l'angle mesuré.

Selon un exemple de ce mode de réalisation, le procédé comprend comprenant en outre après la partie d'étalonnage du capteur de position par la vitesse une partie de vérification du calage du capteur de position angulaire par le courant comprenant les étapes suivantes :

- calculer une commande du convertisseur onduleur pour alimenter les X phases afin de faire tourner le rotor induit à une deuxième vitesse prédéterminée mécanique de façon constante,

- mesurer les courants des phases et les transformer dans un repère de Park, en courant quadratique de retour et en courant direct de retour, en prenant en compte la valeur de l'angle ajusté calculée ,

- calculer une vitesse électrique du rotor en multipliant le nombre de paires de pôles par la deuxième vitesse mécanique prédéterminée,

- imposer à la vitesse prédéterminée mécanique, en entrée d'un régulateur de courant, un courant quadratique de consigne à une première valeur prédéterminée différente de zéro, et un courant direct de consigne à une valeur nulle,

- déterminer l'inductance quadratique,

- comparer à la deuxième vitesse prédéterminée de façon constante, qu'en sortie du régulateur de courant, la valeur de la tension directe de consigne est égale à une valeur de signe inverse, la valeur étant égale au produit de la vitesse électrique calculée, de l'inductance quadratique et le courant quadratique de retour,

- comparer à la deuxième vitesse prédéterminée mécanique de façon constante, qu'en sortie du régulateur de courant, la valeur de la tension quadratique de consigne est égale au produit de la vitesse électrique calculée fois la valeur prédéterminée correspondant au flux des aimants du rotor,

- calculer la différence angulaire entre l'angle ajusté calculé et l'angle mesuré , pendant que le rotor tourne à la deuxième vitesse prédéterminée mécanique de façon constante en fonction de ces comparaisons, et l'enregistrer,

- dans lequel le procédé de calage automatique répète un nombre prédéterminé de fois la partie de vérification du calage du capteur de position angulaire par le courant en incrémentant à chaque fois la valeur prédéterminée du courant quadratique de consigne de façon prédéterminée jusqu'à obtenir une valeur de courant quadratique de retour maximum prédéterminée.

Selon un mode de réalisation, la commande est calculée en calculant la vitesse selon les mesures de positions par le capteur de position, et les mesures de courants,

Selon un mode de réalisation, le procédé comprend une étape de détermination de l'inductance quadratique à partir des valeurs des composantes directe et quadratique du courant mesuré Id et Iq et de cartographies prédéterminées de la machine.

Un autre aspect de l'invention concerne un procédé de commande d'une machine électrique d'une turbomachine, dans lequel à chaque démarrage de la machine électrique, le procédé comprend le procédé de calage automatique d'un capteur de position angulaire décrit précédemment avec ou sans des caractéristiques des modes de réalisation décrit précédemment, et dans lequel le procédé comprend en outre un mode normal de commande du moteur électrique comprenant une étape de calcul de la commande du convertisseur onduleur pour alimenter les phases du stator du moteur électrique selon la consigne reçue des valeurs de courant quadratique de retour et de courant direct de retour, l'unité de calcul réalisant les calculs par la méthode mathématique de la transformée de Park direct ou inverse, selon un angle B comprenant l'angle mesuré additionnée d'une valeur de correction selon une différence angulaire enregistrée.

Selon un mode de réalisation, la valeur de correction peut être égale à la valeur de différence angulaire calculée enregistrée correspondant à la vitesse prédéterminée mécanique enregistrée la plus proche de la vitesse instantanée mécanique mesurée.

Selon un autre mode de réalisation, le procédé comprend en outre une étape de calcul d'une moyenne des valeurs de différence angulaire enregistrées et dans lequel la valeur de correction est égale à la moyenne des valeurs de différence angulaire enregistrées.

Un autre aspect de l'invention concerne une boucle de régulation d'une machine électrique d'une turbomachine pour calculer une commande de convertisseur onduleur pour un moteur électrique comprenant un stator inducteur ayant des bobinages statoriques formant X phases, un rotor induit à aimant ayant p paires de pôles et un arbre pour être couplé à un corps de turbomachine, un convertisseur onduleur comprenant une entrée de commande et des sorties reliées chacune à une des X phases pour commander le moteur électrique, un moyen de mesure du courant délivré sur les X phases et un capteur de position comprenant une partie mobile en rotation montée solidaire sur l'arbre du rotor et une partie fixe solidaire du stator, la boucle de régulation étant configurée pour réaliser le procédé de commande d'une turbomachine comprenant une machine électrique, selon l'aspect de l'invention précédent avec ou sans les différentes caractéristiques d'un des deux modes de réalisations décrit précédemment, pour calculer une commande du convertisseur onduleur, la boucle de régulation comprenant :

- un régulateur de courant comprenant :

    ∘ une entrée de consigne de courants directe et quadratique,

  ○ une entrée de retour de courant quadratique et directe,

  ○ une sortie de consigne de tension,

- une unité de calcul pour réaliser une transformation de Park et Park inverse comprenant :

  ○ une entrée de consigne de tension direct et quadratique, reliée à la sortie de consigne de tension du régulateur de courant,

  ○ une entrée de courant mesurée, reliée au moyen de mesure,

  ○ une entré de position angulaire ajustée,

  ○ une sortie de retour de courant pour sortir un courant quadratique de retour et un courant direct de retour, la sortie de retour de courant étant reliée à l'entrée de retour du régulateur de courant,

  ○ une sortie de commande destinée à être reliée à l'entrée de commande du convertisseur onduleur,

- un compensateur d'erreur d'angle, comprenant :

  ○ une entrée de mesure destinée à être reliée au capteur de mesure d'angle,

  ○ une entrée de retour de courant, reliée à la sortie de retour de courant de l'unité de calcul pour recevoir le courant quadratique de retour et le courant direct de retour,

  ○ une entrée de consigne de tension reliée à la sortie de consigne de tension du régulateur pour recevoir la tension de consigne direct et quadratique,

  ○ une sortie d'angle ajustée reliée à l'entrée de position angulaire ajustée de l'unité de calcul,

  ○ un calculateur d'angle ajusté configuré pour:

   • calculer une valeur de différence angulaire en fonction des mesures de courant et de la consigne de tension et de la vitesse du rotor, pour identifier d'une part l'erreur angulaire sur l'axe direct et d'autre l'erreur angulaire sur l'axe quadratique,

   • calculer un angle ajusté à partir de la valeur de différence angulaire en fonction des comparaisons.

Ainsi le régulateur de courant étant configuré pour transformer une consigne comprenant un courant quadratique de consigne et un courant direct de consigne reçue à son entrée de consigne, en consigne en tension comprenant une tension quadratique et direct avec un angle à sa sortie de consigne selon le retour de courant quadratique de retour et de courant quadratique de retour direct reçu à son entré de retour.

L'unité de calcul peut réaliser la transformation de Park et Park inverse, étant configurée pour :

- transformer les courants mesurés reçu à l'entrée de courant mesurée en un courant quadratique et un courant direct dans un repère de Park, selon la valeur de l'angle ajusté et sortir ce courant quadratique et ce courant direct à sa sortie de retour,

- transformer une transformation de Park inverse sur une tension quadratique et direct reçue à l'entrée de consigne de tension pour transmettre à la sortie de commande une commande modulation de largeur d'impulsion au convertisseur onduleur afin d'alimenter les bobinages statoriques du stator principal.

Le compensateur d'erreur d'angle peut être configuré pour comparer, pendant la période t, la tension directe de la consigne de tension à une valeur de signe inverse, la valeur étant égale à la vitesse électrique calculée multipliée par une inductance quadratique multipliée par le courant quadratique de retour, et comparer la tension quadratique de la consigne de tension à une première valeur égale à la vitesse électrique du rotor calculé multiplié par une valeur prédéterminée correspondant au flux des aimants rotoriques.

Un autre aspect de l'invention concerne une machine électrique comprenant le rotor, le stator, le capteur de positon et le convertisseur onduleur comprenant une entrée de commande et des sorties reliées chacune à une des X phases pour commander le moteur électrique et la boucle de régulation.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

[Fig. 1] montre une représentation d'un schéma de principe avec des blocs fonctionnelles d'une machine électrique permettant de mettre en œuvre l'invention.

[Fig. 2] montre une représentation schématique d'une loi de calcul pour le calcul d'un angle ajusté pour réaliser un procédé de calage automatique d'un capteur de position angulaire selon un exemple d'un mode de réalisation de l'invention.

[Fig. 3] montre une représentation schématique d'un procédé de calage automatique d'un capteur de position angulaire selon un exemple d'un premier mode de réalisation de l'invention.

[Fig. 4] montre une représentation schématique d'un procédé de calage automatique d'un capteur de position angulaire selon un exemple d'un deuxième mode de réalisation de l'invention.

[Fig. 5] montre un exemple de calcul d'un angle B.

## DESCRIPTION DETAILLEE

Les figures sont présentées à titre indicatif et nullement limitatif de l'invention.

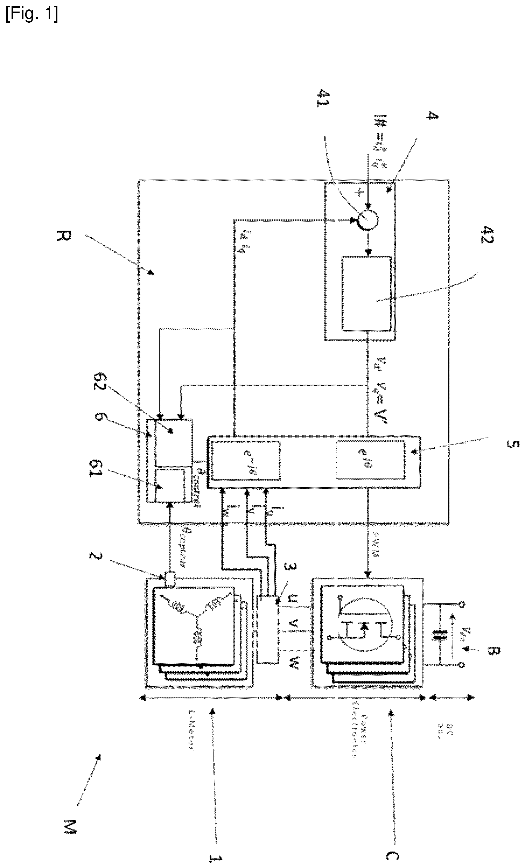

La figure 1 représente une machine électrique M d'une turbomachine, comprenant un moteur électrique 1 comprenant un stator comprenant X phases, un rotor entouré par le stator. La machine électrique M comprend en outre un capteur de position angulaire 2 permettant de mesurer la position du rotor par rapport au stator. Le moteur électrique 1 peut fonctionner en mode moteur et éventuellement en outre dans un mode générateur. La machine électrique M est une machine électrique synchrone multi-phasée d'un propulseur d'un aéronef.

Le rotor comprend un arbre et une partie active montée sur l'arbre. La partie active du rotor comprend des aimants formant P paires de pôles. Le capteur de position angulaire 2 comprend une partie mobile montée sur l'arbre rotor et solidaire en rotation avec l'arbre rotor, une partie fixe montée sur une partie fixe du moteur électrique solidaire du stator, par exemple un palier du moteur électrique 1.

Le capteur de positon 2 peut être un résolveur ou un capteur à effet hall.

Le nombre X dans cet exemple est de trois, mais pourrait être supérieur par exemple cinq ou six. Le stator comprend donc dans cet exemple trois bobinages formant trois sorties de phases U, V, W de trois phases qui sont représentés sur la figure 1 comme couplées en étoiles mais pourrait par exemple être couplées en triangle.

La machine électrique M comprend en outre un convertisseur onduleur C pour alimenter les X phases et une boucle de régulation R permettant de mettre en œuvre un procédé de calage automatique du capteur de position angulaire 2 par rapport au rotor selon un premier et un deuxième mode de réalisation expliqué dans la suite.

Le convertisseur onduleur C est dans cet exemple un onduleur à source d'entrée tension continue soit un convertisseur DC/AC mais pourrait être un convertisseur onduleur à source d'entrée tension alternatif (soit un convertisseur onduleur AC/AC) ou encore un convertisseur onduleur réversible c'est-à-dire AC/DC et DC/AC dans cas ou la machine électrique M permet en outre le mode générateur. Le convertisseur onduleur C comprend N sorties, en l'occurrence trois sorties reliées chacune à une des sorties de phases U, V, W correspondantes. Le convertisseur onduleur C comprend en outre des entrées de puissances, en l'occurrence deux entrées de tension continue reliées aux bornes d'un bus de tension continu B. Le convertisseur onduleur C comprend des interrupteurs de puissance électronique et une entrée de consigne, en l'occurrence en modulation de largeur d'impulsion pour alimenter les interrupteurs de puissance électronique et ainsi varier en mode moteur l'alimentation électrique des phases du stator pour varier la vitesse, le couple du rotor du moteur électrique 1.

La machine électrique M comprend en outre un moyen de mesure 3 pour mesurer des courants de phases Iu, Iv, Iw circulant sur les sorties de phases U, V, W.

La boucle de régulation R comprend un régulateur 4 comprenant une entrée de consigne de courants directe Id# et de courant quadratique Iq#, appelés dans la suite consigne I#. La consigne I# peut provenir d'une unité de contrôle du propulseur ou de plusieurs propulseurs transmettant la consigne I# en courants directe Id# et en courant quadratique Iq# avec un angle a au régulateur 4. Le régulateur 4 comprend une sortie de consigne de tension V' comprenant une tension de consigne direct Vd' et une tension de consigne quadratique Vq' dont les calculs sont expliqués dans la suite.

La boucle de régulation R comprend en outre une unité de calcul 5 utilisant une méthode mathématique connue, à savoir la transformée dite « de Park », directe pour passer d'un repère triphasé U ; V ; W lié au stator à un repère tournant biphasé d ; q en connaissant également la position angulaire $\theta$ du rotor du moteur électrique 1 par rapport à son stator, ainsi que la transformée de Park inverse pour passer du repère de Park d ; q au repère triphasé U; V; W en utilisant aussi une position angulaire du rotor. L'unité de calcul 5 comprend une entrée de consigne de tension reliée à la sortie de consigne de tension du régulateur 4 pour recevoir la consigne de tension V', un calculateur de transformation inverse et de commande, et une sortie de commande reliée à l'entrée de commande du convertisseur onduleur C, pour transmettre la commande PWM calculée par le calculateur de transformation direct, en l'occurrence en modulation de largeur d'impulsion. Le calculateur de transformation Park inverse et de commande est donc configurée pour transformer les vecteurs des tensions de consigne direct et quadratique Vd', Vq' dans un plan de Park à partir d'un angle ajusté $\theta$control expliqué dans suite, en une commande PWM modulation de largeur d'impulsion. La commande PWM modulation de largeur d'impulsion comprend des signaux de tension électrique, pour commander chaque phase en modulation de largeur d'impulsion et ainsi générer un système de tensions alternatives triphasé équilibré.

L'unité de calcul 5 comprend en outre des entrées de courant mesuré recevant les courants de phases iu, iv, iw mesurés, les entrées de courant mesuré sont reliées au moyen de mesure 3, et une sortie de retour de courant quadratique Iq et direct Id reliée à l'entrée de retour du régulateur de courant 4.

L'unité de calcul 5 comprend en outre une entrée de position angulaire ajustée recevant un angle ajusté θcontrol et un calculateur de transformateur de Park configuré pour transformer les courants mesurées Iu, Iv, Iw suivant l'angle ajusté θcontrol reçu à l'entrée d'angle ajusté en composante sur l'axe quadratique du vecteur courant appelé dans la suite courant quadratique Iq, et la composante sur l'axe directe du vecteur courant direct Id dans un plan de Park, appelé aussi dans la suite courant direct Id de retour.

Le courant direct de retour Id est donc dans la suite la composante directe du courant statorique dans le plan de Park calculée à partir des courants statoriques mesurés.

Le courant quadratique Iq de retour est donc dans la suite la composante quadratique du courant statorique dans le plan de Park calculée à partir des courants statoriques mesurés.

Le régulateur de courant 4 comprend des sommateurs 41 (représenté par un seul sommateur sur la figure 1), recevant en entrée non inverseuse le vecteur du courant quadratique de consigne Iq# et le vecteur de courant direct de consigne Id# et en entrée inverseuse le vecteur de courant quadratique de retour Iq ainsi que le vecteur de courant direct de retour Id.

En sortie des sommateurs 41, le régulateur 4 comporte une ligne sur laquelle circule l'écart entre la consigne de courant quadratique Iq# et le courant quadratique de retour Iq ainsi que sur une autre ligne le courant de consigne direct Id# et le courant direct de retour Iq. Les deux lignes sont représentées par une seule ligne. Le régulateur de courant 4 comprend des régulateurs de courant PI (proportionnel intégral) 42 reliées aux lignes d'écart et délivrant des tensions, respectivement les tensions Vq' et Vd'.

La boucle de régulation R comprend en outre un compensateur d'erreur d'angle 6 comportant une entrée de mesure reliée au capteur de mesure d'angle 2 et une unité de traitement de signaux 61 permettant de transformer les signaux électriques reçus du capteur de position 2 en une mesure d'angle, appelée angle mesurée θcapteur.

Le compensateur d'erreur d'angle 6 comprend en outre une entrée de retour de courant, reliée à la sortie du courant de retour de l'unité de calcul 5 recevant le courant quadratique de retour Iq et le courant direct de retour Id, une entrée de consigne de tension reliée à la sortie de consigne de tension du régulateur de courant 42 recevant la tension de consigne V' et une sortie de l'angle ajusté θcontrol reliée à l'entrée d'angle ajusté de l'unité de calcul 5. Le compensateur d'erreur d'angle 6 comprend un calculateur d'angle ajusté 62 (une unité de calcul) permettant de déterminer l'angle ajusté θcontrol à partir de la tension direct Vd', de la tension quadratique Vq', du courant quadratique de retour Iq, du courant direct de retour Id, d'une vitesse électrique du rotor $\omega_{elec}$ calculée à partir de la vitesse de rotation calculée N par les mesures des angles mesurés *θcapteur* du rotor et d'un nombre prédéterminé correspondant au nombre P de paires de pôle au rotor, d'une inductance quadratique Lq.

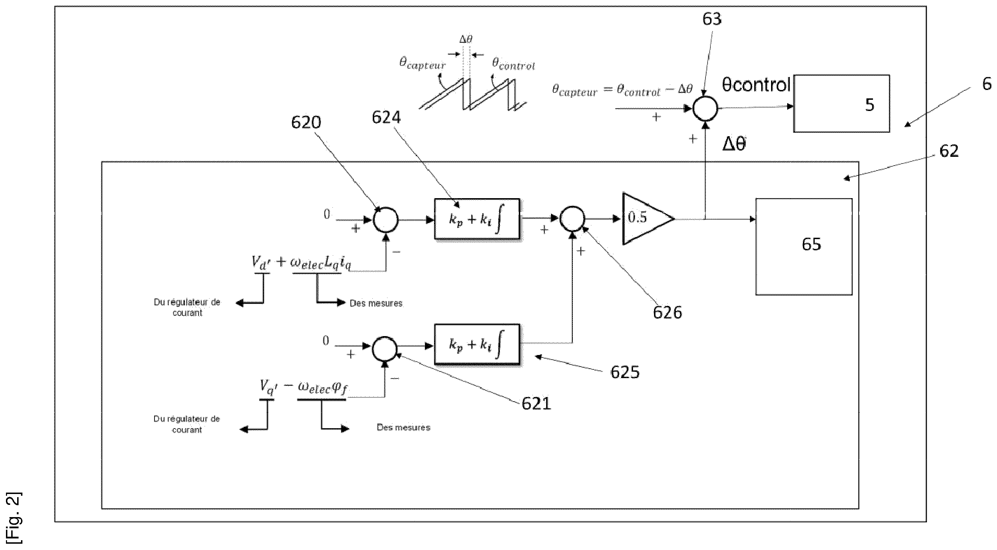

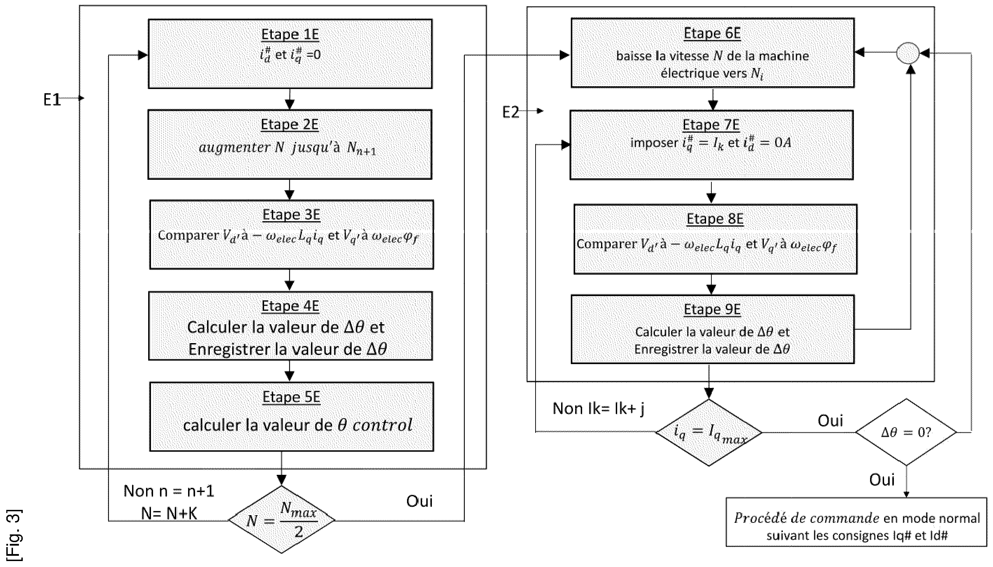

La figure 2 représente un schéma de principe du calcul du compensateur d'erreur d'angle 6 et la figure 3 représente une représentation schématique d'étapes de commande d'un procédé de calage automatique du capteur de position angulaire 2 selon un exemple d'un premier mode de réalisation de l'invention. Les étapes de boucles de courant automatique ne sont pas représentées sur cette figure 3 mais sont décrites dans la suite.

Dans ce premier mode de réalisation, le rotor du moteur électrique 1 de la machine électrique M peut se découpler du corps de la turbomachine pour fonctionner à vide.

Le procédé de calage automatique du capteur de position angulaire 2, selon ce mode de réalisation est réalisé à chaque démarrage de la machine électrique M en commençant par découpler le rotor du corps de la turbomachine. Le démarrage peut être issu par exemple d'une consigne I# reçue d'une unité de contrôle de la turbomachine. Le procédé comprend dans cet exemple une première partie d'identification d'erreur du capteur de position par la vitesse E1 comprenant une première étape de commande 1E consistant à forcer la consigne I# reçue à zéro soit le courant quadratique Iq# et direct Id# à 0 et une deuxième étape 2E consistant à calculer une commande du convertisseur onduleur C afin de faire tourner le rotor induit du moteur électrique 1 à une vitesse prédéterminée $N_n$ de façon constante. La première partie d'identification d'erreur du capteur de position par la vitesse E1 est répétée plusieurs fois en changeant la vitesse prédéterminée $N_n$, ici dans ce mode de réalisation en l'incrémentant, l'indice n représente le nombre de fois de la partie d'identification d'erreur du capteur de position par la vitesse E1 lors de ce procédé. Par exemple la première vitesse prédéterminée $N_{n=1}$ est égale à 100 tr/min et à la deuxième fois de la partie d'identification d'erreur du capteur de position par la vitesse E1, la commande PWM est calculée pour que la vitesse de rotation N du rotor passe de la première vitesse prédéterminée $N_{n=1}$ à la deuxième vitesse prédéterminée $N_{n=2}$. Le procédé comprend donc une première étape de boucle de courant consistant à calculer une consigne de tension V' et la transformer en commande modulation de largeur d'impulsion PWM par l'unité de calcul 5 qui la transmet au convertisseur onduleur C qui alimente en transformant le courant continu du bus DC en trois courant alternatif (modulés) Iu Iv, Iw d'un système triphasé, pour les trois phases UVW dans cet exemple du stator du moteur électrique 1 afin que le rotor à une vitesse de rotation N = à la vitesse de rotation prédéterminé $N_n$.

La partie d'identification d'erreur du capteur de position par la vitesse E1 du procédé comprend en outre une deuxième étape de boucle de courant, de mesure des courants des phases Iu, Iv, Iw par le moyen de mesure de courant 3 et de transformation dans un repère de Park, en courant quadratique de retour Iq et en courant direct de retour Id, en prenant en compte la valeur d'un angle ajustée $\theta capteur$ calculé, expliqué ensuite.

La partie d'identification d'erreur du capteur de position E1 par la vitesse comprend une troisième étape 3E comprenant une sous étape non représentée consistant à calculer une vitesse électrique du rotor $\omega_{elec}$ en multipliant le nombre p de paires de pôles du rotor (prédéterminé) par la vitesse mécanique prédéterminée.

La troisième étape 3E comprend une sous étape non représentée de calcul de la consigne de tension V' par le régulateur pendant une période t, en fonction du courant de consigne comprenant un forçage du courant direct de consigne égal 0 et à partir de courant quadratique de retour Iq et de courant direct de retour id, des courants de retour mesurés et transformés par la transformation de Park à cette vitesse de rotation prédéterminée constante $N_n$.

La troisième étape 3E consiste en outre à comparer pendant la période t la tension direct Vd' de la consigne de tension V' à une valeur de signe inverse, la valeur étant égale à la vitesse électrique calculée $\omega_{elec}$ multipliée par une inductance quadratique Lq multipliée par le courant quadratique Iq, et comparer la tension quadratique Vq' de la consigne de tension V' à une première valeur égale à la vitesse électrique du rotor calculé $\omega_{elec}$ multiplié par une valeur prédéterminée $\varphi_f$ correspondant au flux des aimants rotoriques.

Le calculateur d'angle ajusté 62 peut permettre en outre de calculer une première valeur égale au produit de la vitesse électrique calculée $\omega_{elec}$ de l'inductance quadratique Lq et du courant quadratique Iq.

Le calculateur d'angle ajusté 62 calcul en outre une deuxième valeur de la vitesse électrique calculée $\omega_{elec}$ multipliée avec une valeur prédéterminée $\varphi_f$ correspondant au flux des aimants rotoriques. Le calculateur d'angle ajusté 62 représenté sur la figure 2 permet le calcul de la valeur de différence angulaire $\Delta\theta$ entre la position angulaire ajustée $\theta control$ et la position angulaire mesurée $\theta capteur$ par le capteur de position. En particulier, le calculateur d'angle ajusté 62 identifie l'angle angulaire axe direct décalé $\varepsilon_d$ (erreur de l'angle direct mesuré) par rapport à la composante sur l'axe direct du vecteur courant retour ainsi que l'angle angulaire axe quadratique décalé $\varepsilon_q$ (erreur de l'angle direct mesuré) par rapport à la composante sur l'axe quadratique du vecteur courant retour.

Dans cet exemple, le calculateur d'angle ajusté 62 présenté sur la figure 2 calcul pour que l'angle angulaire axe direct décalé $\varepsilon_d$ et l'angle angulaire axe quadratique décalé $\varepsilon_q$ soient chacun égal à zéro.

Le calculateur d'angle ajusté 62 présenté sur la figure 2 comprend donc dans cet exemple un sommateur 620 pour réaliser la comparaison en recevant à une entrée non inverseuse une valeur 0 et une autre entrée non inverseuse la somme de la tension direct Vd' et de la valeur du premier produit. Comme dans ce mode de réalisation, la consigne est d'avoir le courant direct de retour Id et le courant quadratique de retour Iq égal à zéro, le calculateur d'angle ajusté 62 peut aussi comparer Vd' à la valeur 0 puisque le produit décrit ci-dessus est égal à zéro. L'inductance quadratique Lq ne varie pas sauf si le courant quadratique de retour Iq est très important, comme dans cet exemple, le courant quadratique de retour Iq = 0 ou proche de zéro si erreur, la valeur quadratique peut être ici une valeur prédéterminée.

Le calculateur d'angle ajusté 62 comprend donc en outre dans cet exemple un sommateur 621 pour réaliser une comparaison en recevant en entrée non inverseuse une valeur 0 et en entrée non inverseuse la somme de la tension quadratique Vq' et la deuxième valeur calculée. Selon un autre exemple non représenté, le calculateur d'angle ajusté 62 comprend un sommateur comprenant en entrée non inverseuse la tension quadratique Vq' et en entrée inverseuse la deuxième valeur calculée.

Le calculateur d'angle ajusté 62 peut donc déterminé un angle de position du rotor appelé position angulaire estimé $\theta control$ et donc une valeur de différence angulaire $\Delta\theta$ entre la position angulaire ajustée $\theta control$ et la position angulaire mesurée $\theta capteur$ par le capteur de position.

En effet, on sait que le couple

$$T_{em} = \frac{3}{2}p\left[\varphi_f i_q - \left(L_q - L_d\right)i_d i_q\right]$$

comme le couple est à zéro (machine à vide donc Iq = 0 ), en cas d'erreur angulaire mesuré par le capteur de positon 2, et en supposant négligeable la chute de tension aux bornes des résistances statoriques, la tension direct Vd' et quadratique Vq' est égale à la formule suivante :

$$V_{d'} \approx -\omega_{elec}\left(L_q i_q + \varphi_{PM}\Delta\theta\right)$$

$$V_{q'} \approx \omega_{elec}\left(\left(\varphi_f + L_d i_d\right) - L_q i_q \Delta\theta\right)$$

Comme Id a été forcé à 0, on peut en déterminer $\Delta\theta$

$$\Delta\theta = \frac{1}{2}\left[\left(k_p + \frac{k_i}{s}\right)\varepsilon_d + \left(k_p + \frac{k_i}{s}\right)\varepsilon_q\right]$$

avec $\varepsilon_d = \omega_{elec}L_q i_q + V_{d'}$ et $\varepsilon_q = -\omega_{elec}\varphi_f + V_{q'}$ et $k_p$, $k_i$ sont les gains du correcteur de type proportionnel intégrale utilisée pour annuler l'erreur ( $\overset{\text{.}}{X}{}^{\#}_{d'} - \overset{\text{.}}{X}_{d'}$ ) et (

$\overset{\text{.}}{X}{}^{\#}_{q'} - \overset{\text{.}}{X}_{q'}$ ).

Ld est la composante directe de l' inductance statorique dans le plan de Park,

Lq est la composante quadratique de l' inductance statorique dans le plan de Park. Quel que soit le régulateur utilisé, la consigne de la composante directe de courant sera issue de la cartographie de la composante directe de courant optimale.

Des moyens de détermination de la composante quadratique $L_q$ de l' inductance du moteur électrique 1 synchrone peuvent utilisés des valeurs des composantes du courant de retour directe Id et du courant de retour quadratique Iq et de cartographies du moteur électrique 1.

La partie d'identification d'erreur du capteur de position par la vitesse E1 du procédé de calage automatique du capteur de position angulaire 2 comprend donc une quatrième étape 4E consistant à calculer la valeur de différence angulaire $\Delta\theta$ entre l'angle ajusté $\theta control$ et l'angle mesuré $\theta capteur$ par le capteur de position 2.

On peut voir ainsi sur la figure 2, que dans cet exemple, le calculateur d'angle ajusté 62 comprend en outre un premier et un deuxième régulateur correcteur de type proportionnel intégrale, 624, 625 à la sortie des sommateurs respectivement 620, 621 de la première et la deuxième comparaison, ainsi qu'un sommateur 626 et un multiplicateur 627 par 0.5 pour moyenniser les valeurs de différences .

La partie d'identification d'erreur du capteur de position par la vitesse E1 comprend donc une cinquième étape 5E consistant à calculer l'angle ajusté $\theta control$ en additionnant la valeur de différence angulaire $\Delta\theta$ à l'angle mesuré $\theta capteur$.

Le compensateur d'erreur d'angle 6 comprend donc un sommateur 63 de l'angle mesuré $\theta capteur$ et de la valeur de différence angulaire $\Delta\theta$ pour obtenir l'angle ajusté $\theta control$.

Ainsi, en sortie du compensateur d'erreur d'angle 6, l'unité de calcul 5 reçoit l'angle ajusté $\theta control$ pour réaliser les transformations directes et inverse de Park décrites précédemment dans la boucle de courant.

Dans cet exemple de ce mode de réalisation, le compensateur d'erreur d'angle 6 comprend une mémoire 65 enregistrant la valeur de différence angulaire $\Delta\theta$ ainsi que la vitesse prédéterminée $N_n$ correspondante. Le procédé comprend donc une étape d'enregistrement de la valeur de différence angulaire $\Delta\theta$ et de la valeur prédéterminée de la vitesse de rotation $N_n$ correspondante, ici dans cet exemple $N_n = K * n$ soit 100tr/min * n.

En outre, dans cet exemple de ce mode de réalisation, le procédé de calage automatique du capteur de position angulaire 2 vérifie que la vitesse prédéterminée $N_n$ n'est pas égale à la moitié de la vitesse maximum NMax du rotor du moteur électrique 1 et en ce que le procédé répète les étapes décrites précédemment de la partie d'identification d'erreur du capteur de position par la vitesse E1 en incrémentant la vitesse de rotation N de façon prédéterminée. Ici dans cet exemple, la partie d'identification d'erreur du capteur de position par la vitesse E1 est répétée plusieurs fois en réduisant à chaque fois la vitesse de rotation prédéterminée $N_n$, ici en l'occurrence de la valeur K, par exemple 100tr/min. Le nombre de fois (l'indice n) où la partie d'identification d'erreur du capteur de position par la vitesse E1 est réalisée est donc égale à la vitesse max NMax divisé par K.

On augmente donc la valeur de la vitesse de rotation N de 100 tr/ min , jusqu'à ce que ce cette dernière atteigne une valeur NMax prédéterminée. Dans cet exemple la valeur NMax prédéterminée est égale à la moitié de la vitesse maximum du rotor prédéterminée. Le fait de réaliser la partie d'identification d'erreur du capteur de position par la vitesse E1 à différente vitesse en l'augmentant permet d'affiner la différence angulaire calculée.

Le compensateur 6 comprend un sommateur 63 recevant en entrée non inverseuse la mesure d'angle $\theta capteur$ délivrée par l'unité de traitement 61 et, en entrée non inverseuse, la différence angulaire $\Delta\theta$ permettant de calculer un angle estimé calculé $\theta control$ et le transmettre à l' unité de calcul 5.

Les étapes de boucle de courant décrites précédemment sont simultanées du fait qu'elles sont dans une boucle de régulation fermée.

Dans cet exemple de ce mode de réalisation, le procédé de calage automatique du capteur de position angulaire 2 comprend en outre une partie d'identification d'erreur du capteur de position par le couple E2 lorsque la vitesse prédéterminée est égale ou supérieure à la valeur NMax prédéterminée.

La partie d'identification d'erreur du capteur de position par le couple E2 nécessite de coupler une charge sur l'arbre du rotor de la machine électrique 1.

La partie d'identification d'erreur du capteur de position par le couple E2 comprend une première étape 6E de calcul d'une commande PWM de l'onduleur C pour alimenter les x phases afin de faire tourner le rotor induit à une vitesse pour le calcul par le couple prédéterminé Ni de façon constante, la commande étant calculée par l'unité de calcul en calculant la vitesse selon les mesures de positions par le capteur de position 2.

Cette partie d'identification d'erreur du capteur de position par le couple E2 comprend les étapes de la boucle de courant décrites précédemment : la mesure des courants Iu, Iv, Iw des phases et les transformer dans un repère de Park, en courant quadratique Iq et en courant direct Id, en prenant en compte l'angle ajusté calculé, mais aussi le calcul d'une vitesse électrique du rotor $\omega_{elec}$ en multipliant le nombre de paires de pôles par la vitesse prédéterminée.

Cette partie d'identification d'erreur du capteur de position par le couple E2 comprend une étape 7E d'imposer à la vitesse prédéterminée Ni en entrée du régulateur de courant 4, un courant quadratique de consigne Iq# à une première valeur prédéterminée Ik différente de zéro, et un courant direct de consigne Id# à une valeur nulle 0, à partir des courants mesurés transformés par la transformation de Park.

La partie d"identification d'erreur du capteur de position par le couple E2 comprend une étape 8E consistant à comparer à la deuxième vitesse prédéterminée Ni de façon constante, la valeur de la tension directe de consigne Vd' avec la première valeur égale à $\omega_{elec}L_q i_q$. L'inductance quadratique $L_q$ peut être calculée ou déterminée ou être prédéterminée. Le compensateur d'erreur d'angle 6 peut utiliser le calculateur d'angle ajusté 62 pour réaliser cette étape de façon similaire à la partie la partie d'étalonnage du capteur de position parla vitesse E1. Ainsi l'étape 8E comprend en outre la comparaison à la deuxième vitesse prédéterminée de façon constante, qu'en sortie du régulateur de courant, la valeur de la tension quadratique de consigne Vq' est égale à la deuxième valeur calculée $\omega_{elec} * \varphi_f$.

La partie d"identification d'erreur du capteur de position par le couple E2 comprend une étape 9E de calcul de la différence angulaire $\Delta\theta$ avec le calculateur d'angle ajusté 62 pendant que le rotor tourne à la deuxième vitesse prédéterminée Ni de façon constante en fonction de ces comparaisons, et enregistrer la différence angulaire $\Delta\theta$ avec la vitesse prédéterminée Ni.

Le procédé de calage automatique répète un nombre prédéterminé de fois la partie de vérification du calage du capteur de position angulaire 2 par le courant en incrémentant par palier prédéterminé, la valeur prédéterminée Ik du courant quadratique de consigne Iq# jusqu'à ce que le courant quadratique de retour Iq est égal à une valeur prédéterminée finale correspondant dans cet exemple à la valeur de courant quadratique de retour maximum prédéterminée Iqmax. Cela permet d'affiner la différence angulaire $\Delta\theta$ calculée et l'enregistrer à chaque partie de vérification du calage du capteur de position angulaire 2 par le courant.

Comme la différence angulaire $\Delta\theta$ permet d'avoir un courant ajusté $\theta$control dans la boucle de courant, la différence angulaire $\Delta\theta$ tend vers 0 et est vérifié, si la différence angulaire $\Delta\theta$ est différent de 0 quand le courant quadratique de retour Iq est égal à une valeur prédéterminée finale, le procédé de calage automatique répète un nombre prédéterminé de fois la partie de vérification du calage du capteur de position angulaire 2 par le courant depuis le début, sinon il passe dans un mode normal de fonctionnement de la commande PWM du moteur électrique 1.

Le procédé de commande d'une machine électrique d'une turbomachine en mode dit normal comprend les étapes de la boucle de courant, en utilisant la consigne de courant direct Id# et quadratique Iq# et le courant quadratique de retour Iq et le courant direct de retour Id calculé par l'unité de calcul 5 par la méthode mathématique de la transformée de Park des courant mesurés Iu,

Iv, Iw , selon un angle B comprenant la mesure d'un angle $\theta$capteur additionné d'une valeur selon une différence angulaire $\Delta\theta$ enregistrée.

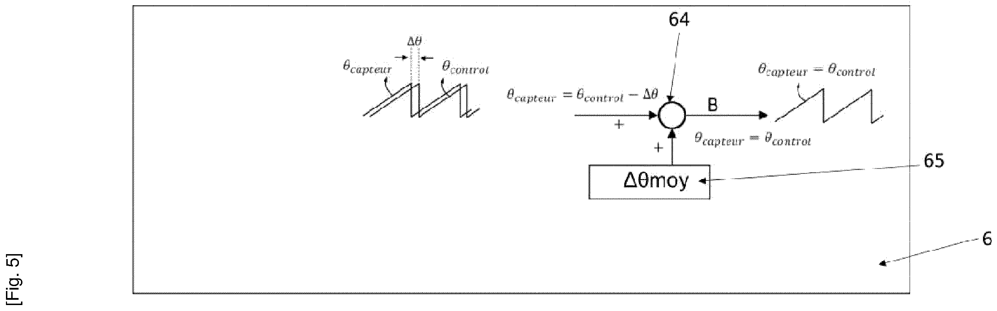

La figure 5 représente un exemple de calcul de l'angle B qui est égal à la valeur de l'angle mesuré $\theta$capteur additionnée d'une moyenne de différence angulaire $\Delta\theta$moy calculée à partir des valeurs de différence angulaire $\Delta\theta$ enregistrée dans la mémoire 65.

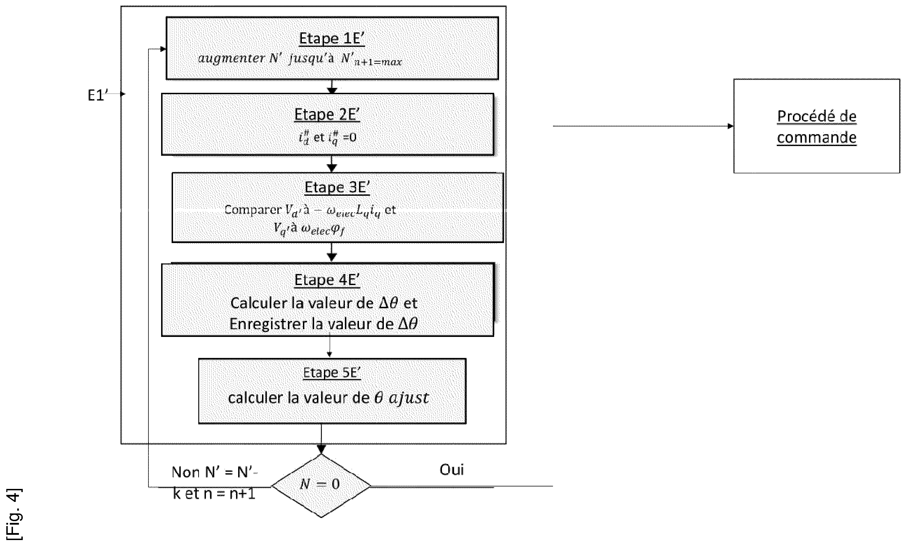

La figure 4 représente un deuxième mode de réalisation du procédé de calage automatique du capteur de position angulaire 2. A la différence avec le premier mode de réalisation, ce procédé permet de réaliser le calage automatique du capteur de position angulaire 2 du rotor du moteur électrique 1 dont le rotor est couplé à un corps d'une turbomachine. Le corps entraîne un couple d'inertie et donc la machine électrique ne tourne pas réellement à vide.

Dans ce deuxième mode de réalisation du procédé de calage automatique du capteur de position angulaire 2, le procédé comprend comme dans le premier mode de réalisation une partie d'identification d'erreur du capteur de position par la vitesse 1E' sauf en ce qu'elle est différente en ce que la vitesse de rotation prédéterminée $N'_n$ est la vitesse de rotation max Nmax et en ce que à chaque fois que le procédé répète la partie d'identification d'erreur du capteur de position par la vitesse 1E', la valeur de la vitesse prédéterminée $N'_n$ est réduite par exemple ici d'une constante k.

Dans cet exemple de ce mode de réalisation la première étape 1E' est le calcul d'une commande PWM du convertisseur onduleur C) afin de faire tourner le rotor induit à une vitesse prédéterminée $N'_n$ de façon constante, soit la première fois à la première vitesse prédéterminée $N'_1$ (l'indice n étant = 1).

La deuxième étape 2E' est l'étape de calcul d'une consigne de tension V' pendant une période t pour obtenir une valeur de courant direct Id égale à 0 à partir de courant quadratique de retour Iq et du courant direct de retour Id transformés par la transformation de Park, est réalisée en imposant une consigne de courant quadratique Iq# égal à zéro et un courant direct de consigne Id# égal à zéro.

Autrement dit, dans ce deuxième mode de réalisation, la première étape 1E' et deuxième étape 2E' correspond respectivement à la deuxième étape et à la première étape du premier mode de réalisation, sauf en ce que la première vitesse prédéterminée $N'_1$ est la vitesse maximum Nmax dans ce mode de réalisation alors qu'à l'inverse dans le premier mode de réalisation, la première vitesse prédéterminée $N_1$ est la plus faible des vitesse prédéterminée $N_n$.

La troisième étape 3E', la quatrième étape 4E', et la cinquième étape 5E' de ce deuxième mode de réalisation correspond à respectivement la troisième étape de comparaison 3E, la quatrième étape 4E de calcul de la valeur de différence angulaire $\Delta\theta$, et la cinquième étape 5E de calcul l'angle ajusté $\theta$control du premier mode de réalisation.

Comme expliqué précédemment, dans ce mode de réalisation, la partie d'identification d'erreur du capteur de position par la vitesse E1' est répétée plusieurs fois en réduisant à chaque fois la vitesse de rotation prédéterminée N'$_n$, ici en l'occurrence d'une valeur k, par exemple 200tr/min. Le nombre de fois où la partie d'identification d'erreur du capteur de position par la vitesse E1' est réalisée est donc égale à la vitesse max divisé par k.

Lorsque la vitesse de rotation prédéterminée N'n égale à zéro (l'indice n a donc une valeur égale Nmax/k), un procédé de commande en mode normal du moteur électrique 1 peut commencer pour le calcul de la commande du convertisseur onduleur C pour alimenter les phases du stator du moteur électrique 1 selon la consigne reçue de courant direct Id# et quadratique Iq# et les valeurs de courant quadratique de retour Iq et de courant direct de retour Id calculés par l'unité de calcul 5 par la méthode mathématique de la transformée de Park des courant mesurés Iu, Iv, Iw , selon un angle B comprenant la valeur de l'angle mesuré $\theta$*capteur* additionnée d'une valeur de correction selon une différence angulaire $\Delta\theta$ enregistrée. La valeur de correction peut être comme dans le premier mode de réalisation, la moyenne des valeurs de différence angulaire $\Delta\theta$moy enregistrée dans la mémoire 65 mais peut être selon un autre exemple, la valeur de différence angulaire $\Delta\theta$ calculée enregistrée correspondant à la vitesse prédéterminée Nn enregistrée la plus proche de la vitesse instantanée mesurée N.

Sauf précision contraire, un même élément apparaissant sur des figures différentes présente une référence unique.

## Revendications

1.  Procédé de calage automatique d'un capteur de position angulaire (2) mesurant un angle correspondant à la position angulaire mécanique d'un rotor induit à aimant formant P paires de pôles par rapport à un stator comprenant X phases d'un moteur électrique (1) synchrone multi-phasée d'une machine électrique (M) d'un propulseur d'un aéronef, le capteur de position (2) comprenant une partie mobile montée sur le rotor induit et une partie fixe par rapport au stator, le procédé utilisant une boucle de régulation (R) pour transmettre une commande (PWM) à un convertisseur onduleur (C) de la machine électrique (M) pour alimenter les phases du stator, la boucle de régulation (R) comprenant un régulateur de courant (4) comprenant une entrée de consigne pour recevoir une consigne de courant (I#) comprenant un courant quadratique de consigne (Iq#) correspondant à une composante sur l'axe quadratique du vecteur courant de consigne et un courant directe de consigne (Id#) correspondant à une composante sur l'axe direct du vecteur courant de consigne, pour délivrer une consigne de tension (V') comprenant une tension quadratique (Vq') et direct (Vd') avec un angle (a), une unité de calcul (5) pour calculer une transformation de Park direct et de Park inversé, permettant de transformer la consigne de tension (V') en commande (PWM) du convertisseur onduleur (C), un compensateur d'erreur d'angle (6) pour identifier une erreur d'angle et la compenser, le procédé étant **caractérisé en ce qu'**il comprend une partie d'identification d'erreur du capteur de position par la vitesse (E1, E1'), comprenant les étapes suivantes :

    - calculer (2E, 1E') la commande (PWM) du convertisseur onduleur (C) afin de faire tourner le rotor induit à une vitesse prédéterminée mécanique ($N_n$) de façon constante,
    - mesurer les courants des phases (Iu, Iv, Iw) et les transformer dans un repère de Park, en courant quadratique de retour (Iq) et en courant direct de retour (Id), en prenant en compte un angle ajusté ($\theta$*control*) calculé,
    - calculer une vitesse électrique ($\omega_{elec}$) du rotor en multipliant le nombre p de paires de pôles par la vitesse prédéterminée mécanique (Nn),
    - calculer (2E, 1E') une consigne de tension (V') pendant une période t dans laquelle le rotor tourne à la vitesse prédéterminée mécanique ($N_n$) en imposant une valeur de courant direct égale à 0 au régulateur de courant,
    - Identifier une erreur de décalage de la composante directe ($\varepsilon_d$) sur son axe direct en comparant (3E, 3E') pendant la période t la tension direct (Vd') de la consigne de tension (V') à une valeur de signe inverse, la valeur étant égale à la vitesse électrique ($\omega_{elec}$) calculée multipliée par une inductance quadratique (Lq) multipliée par le courant quadratique de retour (Iq), et est **caractérisé par** les étapes:
    - Identifier une erreur de décalage de la composante quadratique ($\varepsilon_q$) sur son axe quadratique en comparant, pendant la période t, la tension quadratique (Vq') de la consigne de tension (V') à une première valeur égale à la vitesse électrique du rotor calculé ($\omega_{elec}$) multiplié par une valeur prédéterminée ($\varphi_f$) correspondant au flux des aimants rotoriques,
    - calculer (4E, 4E') une valeur de différence angulaire ($\Delta\theta$) à partir de ces erreurs de décalage angulaire direct et quadratique identifiés,
    - déterminer (5E, 5E') à la période t, un angle ajusté ($\theta$*control*) en fonction de la valeur de différence angulaire calculée ($\Delta\theta$), et la valeur de l'angle mesuré ($\theta$*capteur*),
    - transmettre le courant quadratique de retour (Iq) et le courant direct de retour (Id) selon l'angle ajusté ($\theta$*control*) au régulateur de courant (4).

**2.** Procédé de calage automatique d'un capteur de position angulaire (2) selon la revendication précédente dans lequel le calcul de la valeur de différence angulaire ($\Delta\theta$) est calculée selon cette formule :

-

$$\Delta\theta = \frac{1}{2}\left[\left(k_p + \frac{k_i}{s}\right)\varepsilon_d + \left(k_p + \frac{k_i}{s}\right)\varepsilon_q\right]$$

- avec $\varepsilon_d = \omega_{elec}L_q i_q + V_{d'}$ correspondant à la comparaison pour identifier l'erreur angulaire de la composante direct et $\varepsilon_q = -\omega_{elec}\varphi_f + V_{q'}$ correspondant à la comparaison pour identifier l'erreur angulaire de la composante quadratique, Lq est l'inductance quadratique, $k_p$, $k_i$ sont les gains du correcteur de type proportionnel intégrale utilisée pour annuler l'erreur entre respectivement le courant quadratique de consigne (Iq#) et le courant quadratique retour (Iq) et le courant direct de consigne (Id#) et le courant direct retour (Id).

**3.** Procédé de calage automatique d'un capteur de position angulaire (2) selon l'une des revendications précédentes, dans lequel le rotor est couplé à un arbre du propulseur comprenant un couple d'inertie, dans lequel pendant la période t, la valeur de la tension directe (Vd') est imposée pour être égale à 0.

**4.** Procédé de calage automatique d'un capteur de position angulaire (2) selon l'une des revendications précédentes, dans lequel le rotor est couplé à un corps d'une turbomachine, et en ce que la partie d'étalonnage du capteur de position (2) par la vitesse (E1') est recommencée selon un nombre X fois à différentes vitesses prédéterminées et en ce que à chaque fois qu'une partie d'étalonnage du capteur de position par la vitesse est réalisée, on enregistre la valeur de différence angulaire ($\Delta\theta$) entre l'angle ajusté ($\theta$control) et l'angle mesuré ($\theta$capteur) et la vitesse prédéterminée mécanique (N') correspondante.

**5.** Procédé de calage automatique d'un capteur de position angulaire (2) selon la revendication 4, dans lequel la première vitesse mécanique prédéterminée (N'$_1$) est la vitesse la plus grande des vitesses prédéterminées (Nmax), par exemple la vitesse maximum de rotation du rotor, et en ce que le procédé recommence la partie d'étalonnage du capteur de position par la vitesse (E1') en diminuant la vitesse mécanique du rotor (N') selon un écart prédéterminé (k) jusqu'à l'arrêt en rotation du rotor.

**6.** Procédé de calage automatique d'un capteur de position angulaire (2) selon l'une des revendications 1 à 2, dans lequel la machine électrique peut tourner à vide, par exemple en se débrayant d'un arbre de turbomachine, le procédé comprend :

- dans l'étape de calcul d'une commande du convertisseur onduleur (2E) de la partie d'identification d'erreur du capteur de position par la vitesse (E1), la vitesse de rotation prédéterminée mécanique (N) est incrémentée de façon prédéterminée à chaque fois que le procédé recommence la partie d'identification d'erreur du capteur de position par la vitesse (E1),
- dans la partie d'identification d'erreur du capteur de position par la vitesse (E1), une étape d'enregistrement de chaque valeur de différence angulaire ($\Delta\theta$) entre la valeur de l'angle ajusté ($\theta$control) calculée l'angle mesuré ($\theta$capteur).

**7.** Procédé de calage automatique d'un capteur de position angulaire d'une machine électrique multiphasée selon la revendication 6, comprenant en outre après la partie d'étalonnage du capteur de position par la vitesse (E1) une partie de vérification du calage du capteur de position angulaire (2) par le courant (E2) comprenant les étapes suivantes :

◦ calculer (6E) une commande du convertisseur onduleur (C) pour alimenter les X phases afin de faire tourner le rotor induit à une deuxième vitesse prédéterminée mécanique (Ni) de façon constante,
◦ mesurer les courants (iu, Iv, Iw) des phases et les transformer dans un repère de Park, en courant quadratique de retour (Iq) et en courant direct de retour (Id), en prenant en compte la valeur de l'angle ajusté ($\theta$control) calculée ,
◦ calculer une vitesse électrique du rotor ($\omega$_elec) en multipliant le nombre (P) de paires de pôles par la deuxième vitesse prédéterminée mécanique (Ni),
◦ imposer (7E) à la vitesse prédéterminée mécanique (Ni), en entrée d'un régulateur de courant (4), un courant quadratique de consigne (Iq#) à une première valeur prédéterminée (Ik) différente de zéro, et un courant direct de consigne (Id#) à une valeur nulle,
◦ déterminer l'inductance quadratique (Lq),
◦ comparer (8E) à la deuxième vitesse prédéterminée mécanique de façon constante, qu'en sortie du régulateur de courant (4), la valeur de la tension directe de consigne (Vd') est égale à une valeur de signe inverse, la valeur étant égale au produit de la vitesse électrique calculée ($\omega$_elec), de l'inductance quadratique (Lq) et le courant quadratique de retour (Iq),
◦ comparer (8E) à la deuxième vitesse prédéterminée mécanique de façon constante, qu'en sortie du régulateur de courant (4), la valeur de la tension quadratique de consigne (Vq') est égale au produit de la vitesse électrique (w_elec) calculée fois la valeur prédéterminée ($\varphi_f$) correspondant au flux des aimants du rotor,

∘ calculer (9E) la différence angulaire ($\Delta\theta$) entre l'angle ajusté calculé ($\theta$control) et l'angle mesuré ($\theta$capteur), pendant que le rotor tourne à la deuxième vitesse prédéterminée mécanique (Ni) de façon constante en fonction de ces comparaisons, et l'enregistrer,

- dans lequel le procédé de calage automatique répète un nombre prédéterminé N de fois la partie de vérification du calage du capteur de position angulaire (2) par le courant (E2) en incrémentant à chaque fois la valeur prédéterminée (Ik) du courant quadratique de consigne (Iq#) de façon prédéterminée jusqu'à obtenir une valeur de courant quadratique de retour maximum (Iqmax) prédéterminée.

**8.** Procédé de commande d'une machine électrique d'une turbomachine, dans lequel à chaque démarrage de la machine électrique, le procédé comprend le procédé de calage automatique d'un capteur de position angulaire (2) selon l'une quelconque des revendications précédentes, et dans lequel le procédé comprend en outre un mode normal de commande du moteur électrique (1) comprenant une étape de

- calcul de la commande du convertisseur onduleur (C) pour alimenter les phases du stator du moteur électrique (1) selon la consigne (I#) reçue des valeurs de courant quadratique de retour (Iq) et de courant direct de retour (Id), l'unité de calcul (5) réalisant les calculs par la méthode mathématique de la transformée de Park direct ou inverse, selon un angle B comprenant l'angle mesuré ($\theta$capteur) additionnée d'une valeur de correction selon une différence angulaire enregistrée ($\Delta\theta$).

**9.** Procédé de commande d'une turbomachine comprenant une machine électrique, selon la revendication précédente dans lequel la valeur de correction peut être égale à la valeur de différence angulaire ($\Delta\theta$) calculée enregistrée correspondant à la vitesse prédéterminée mécanique ($N_n$) enregistrée la plus proche de la vitesse instantanée mécanique (N) mesurée.

**10.** Procédé de commande d'une turbomachine comprenant une machine électrique, selon la revendication 8, comprenant en outre une étape de calcul d'une moyenne ($\Delta\theta moy$) des valeurs de différence angulaire ($\Delta\theta$) enregistrées et dans lequel la valeur de correction est égale à la moyenne ($\Delta\theta moy$) des valeurs de différence angulaire enregistrées ($\Delta\theta$).

**11.** Boucle de régulation (R) d'une machine électrique (M) d'une turbomachine pour calculer une commande de convertisseur onduleur (C) pour un moteur électrique (1) comprenant un stator inducteur ayant des bobinages statoriques formant X phases, un rotor induit à aimant ayant p paires de pôles et un arbre pour être couplé à un corps de turbomachine, un convertisseur onduleur (C) comprenant une entrée de commande et des sorties reliées chacune à une des X phases (u, v, w) pour commander le moteur électrique (1), un moyen de mesure (3) du courant délivré sur les X phases (u, v, w) et un capteur de position (2) comprenant une partie mobile en rotation montée solidaire sur l'arbre du rotor et une partie fixe solidaire du stator, la boucle de régulation (R) étant configurée pour réaliser le procédé de commande d'une turbomachine comprenant une machine électrique, selon l'une des revendications 8 à 10, pour calculer une commande (PWM) du convertisseur onduleur (C), la boucle de régulation (R) comprenant :

1. un régulateur de courant (4) comprenant :

a. une entrée de consigne de courants directe et quadratique,
b. une entrée de retour de courant quadratique et directe,
c. une sortie de consigne de tension,

2. une unité de calcul (5) pour réaliser une transformation de Park et Park inverse comprenant :

a. une entrée de consigne de tension direct et quadratique, reliée à la sortie de consigne de tension du régulateur de courant (4),
b. une entrée de courant mesurée, reliée au moyen de mesure (3),
c. une entré de position angulaire ajustée,
d. une sortie de retour de courant pour sortir un courant quadratique de retour (Iq) et un courant direct de retour (Id), la sortie de retour de courant étant reliée à l'entré de retour du régulateur de courant (4),
e. une sortie de commande destinée à être reliée à l'entrée de commande du convertisseur onduleur (C),

3. un compensateur d'erreur d'angle (6), comprenant :

a. une entrée de mesure destinée à être reliée au capteur de mesure d'angle (3),
b. une entrée de retour de courant, reliée à la sortie de retour de courant de l'unité de calcul (5) pour recevoir le courant quadratique de retour (Iq) et le courant direct de retour (id),

c. une entrée de consigne de tension reliée à la sortie de consigne de tension du régulateur (42) pour recevoir la tension de consigne direct et quadratique (Vd', Vq'),

d. une sortie d'angle ajustée reliée à l'entrée de position angulaire ajustée de l'unité de calcul (5)

la boucle de régulation étant **caractérisée par** le compensateur d'erreur d'angle comprenant:

e. un e. un calculateur d'angle ajusté (62) configuré pour:

○ calculer une valeur de différence angulaire ($\Delta\theta$) en fonction des mesures de courant et de la consigne de tension et de la vitesse du rotor, pour identifier d'une part l'erreur angulaire sur l'axe direct et d'autre l'erreur angulaire sur l'axe quadratique,

○ calculer un angle ajusté *($\theta$control)* à partir de la valeur de différence angulaire ($\Delta\theta$).

12. Machine électrique (M) comprenant le rotor, le stator, le capteur de positon (2) et le convertisseur onduleur (C) comprenant une entrée de commande et des sorties reliées chacune à une des X phases pour commander le moteur électrique (1) et la boucle de régulation (R) selon la revendication précédente.

**Patentansprüche**

1. Verfahren zum automatischen Einstellen eines Winkelpositionssensors (2), der einen Winkel misst, der der mechanischen Winkelposition eines induzierten Magnetrotors mit P Polpaaren in Bezug auf einen Stator mit X Phasen eines mehrphasigen Synchronmotors (1) einer elektrischen Maschine (M) eines Flugzeugantriebs entspricht, wobei der Positionssensor (2) einen beweglichen Teil, der auf dem induzierten Rotor montiert ist, und einen in Bezug zum Stator feststehenden Teil umfasst, wobei das Verfahren einen Regelkreis (R) verwendet, um einen Befehl (PWM) an einen Wechselrichter (C) der elektrischen Maschine (M) zu übertragen, um die Phasen des Stators zu versorgen, wobei der Regelkreis (R) einen Stromregler (4) umfasst, der einen Sollwerteingang zum Empfangen eines Stromsollwerts (I#) umfasst, der einen quadratischen Stromsollwert (Iq#) umfasst, der einer Komponente auf der quadratischen Achse des Stromsollwertvektors entspricht, und einen Durchlassstromsollwert (Id#), der einer Komponente auf der direkten Achse des Stromsollwertvektors entspricht, um einen Spannungs-Sollwert (V') zu liefern, der eine quadratische Spannung (Vq') und eine direkte Spannung (Vd') mit einem Winkel (a) umfasst, eine Berechnungseinheit (5) zum Berechnen einer direkten Park-Transformation und einer inversen Park-Transformation, die es ermöglicht, den Spannungs-Sollwert (V') in einen Befehl (PWM) für den Wechselrichter (C) umzuwandeln, einen Winkelfehlerkompensator (6) zum Erkennen eines Winkelfehlers und zum Kompensieren desselben, wobei das Verfahren **dadurch gekennzeichnet ist, dass** es einen Abschnitt zum Erkennen eines Fehlers des Positionssensors anhand der Geschwindigkeit (E1, E1') umfasst, der die folgenden Schritte umfasst:

- Berechnen (2E, 1E') des Befehls (PWM) des Wechselrichters (C), um den induzierten Rotor mit einer vorbestimmten mechanischen Drehzahl ($N_n$) konstant drehen zu lassen,
- Messen der Phasenströme (lu, Iv, Iw) und Umwandeln dieser in einem Park-Koordinatensystem, in einen quadratischen Rückstrom (Iq) und in einen direkten Rückstrom (Id), unter Berücksichtigung eines Sollwinkels *($\theta$control),*
- Berechnen einer elektrischen Drehzahl ($\omega_{elec}$) des Rotors durch Multiplizieren der Anzahl p der Polpaare mit der vorbestimmten mechanischen Drehzahl (Nn),
- Berechnen (2E, 1E') eines Spannungs-Sollwerts (V') während einer Zeitspanne t, in der sich der Rotor mit der vorbestimmten mechanischen Drehzahl ($N_n$) dreht, indem dem Stromregler ein Durchlassstromwert von 0 auferlegt wird,
- Identifizieren eines Versatzfehlers der direkten Komponente *($\varepsilon_d$)* auf ihrer direkten Achse durch Vergleichen (3E, 3E') während der Zeitspanne t der direkten Spannung (Vd') des Spannungs-Sollwerts (V') mit einem Wert mit umgekehrtem Vorzeichen, wobei der Wert gleich der berechneten elektrischen Drehzahl ($\omega_{elec}$) multipliziert mit einer quadratischen Induktivität (Lq) multipliziert mit dem quadratischen Rückstrom (Iq) ist, und durch die folgenden Schritte gekennzeichnet ist:
- Identifizieren eines Versatzfehlers der quadratischen Komponente *($\varepsilon_q$)* auf ihrer quadratischen Achse durch Vergleichen der quadratischen Spannung (Vq') des Spannungs-Sollwerts (V') während der Zeitspanne t mit einem ersten Wert, der gleich der berechneten elektrischen Drehzahl des Rotors ($\omega_{elec}$) multipliziert mit einem vorbestimmten Wert *($\varphi_f$)* ist, der dem Fluss der Rotormagnete entspricht,
- Berechnen (4E, 4E') eines Winkelabweichungswertes *($\Delta\theta$)* aus diesen identifizierten direkten und quadratischen Winkelversatzfehlern,
- Bestimmen (5E, 5E') in der Zeitspanne t eines Sollwinkels *($\theta$control)* in Abhängigkeit vom berechneten Winkelabweichungswert *($\Delta\theta$)* und des Werts des gemessenen Winkels *($\theta$capteur),*

- Übertragen des quadratischen Rückstroms (Iq) und des direkten Rückstroms (Id) entsprechend dem Sollwinkel *(θcontrol)* an den Stromregler (4).

2. Verfahren zur automatischen Einstellung eines Winkelpositionssensors (2) gemäß dem vorhergehenden Anspruch, bei dem die Berechnung des Winkelabweichungswerts (Δθ) nach folgender Formel erfolgt:

-

$$\Delta\theta = \frac{1}{2}\left[\left(k_p + \frac{k_i}{s}\right)\varepsilon_d + \left(k_p + \frac{k_i}{s}\right)\varepsilon_q\right]$$

- wobei $\varepsilon_d = \omega_{elec} L_q I_q + V_{d'}$ dem Vergleich zur Ermittlung des Winkelfehlers der direkten Komponente entspricht und $\varepsilon_q = -\omega_{elec} \varphi_f + V_{q'}$ dem Vergleich zur Ermittlung des Winkelfehlers der quadratischen Komponente entspricht, Lq die quadratische Induktivität ist, $k_p$, $k_i$ die Verstärkungen des Proportional-Integral-Reglers sind, der verwendet wird, um den Fehler zwischen dem quadratischen Sollstrom (Iq#) und dem quadratischen Rückstrom (Iq) bzw. dem Durchlasssollstrom (Id#) und dem direkten Rückstrom (Id) zu kompensieren.

3. Verfahren zum automatischen Einstellen eines Winkelpositionssensors (2) gemäß einem der vorhergehenden Ansprüche, bei dem der Rotor mit einer Welle des Antriebs gekoppelt ist, die ein Trägheitsmoment aufweist, wobei während der Zeitspanne t der Wert der direkten Spannung (Vd') auf 0 gesetzt wird.

4. Verfahren zum automatischen Einstellen eines Winkelpositionssensors (2) gemäß einem der vorhergehenden Ansprüche, bei dem der Rotor mit einem Körper einer Turbomaschine gekoppelt ist, und **dadurch gekennzeichnet, dass** der Abschnitt des Kalibrierens des Positionssensors (2) durch die Geschwindigkeit (E1') X-mal bei verschiedenen vorbestimmten Geschwindigkeiten wiederholt wird und dass jedes Mal, wenn ein Abschnitt des Kalibrierens des Positionssensors durch die Geschwindigkeit durchgeführt wird, der Winkelabweichungswert (Δθ) zwischen dem Sollwinkel (θcontrol) und dem gemessenen Winkel (θcapteur) und der entsprechenden vorbestimmten mechanischen Drehzahl (N') gespeichert wird.

5. Verfahren zum automatischen Einstellen eines Winkelpositionssensors (2) gemäß Anspruch 4, bei dem die erste vorbestimmte mechanische Drehzahl (N'$_1$) die größte der vorbestimmten Drehzahlen (Nmax) ist, beispielsweise die maximale Drehzahl des Rotors, und **dadurch gekennzeichnet, dass** das Verfahren den Abschnitt des Kalibrierens des Positionssensors mit der Geschwindigkeit (E1') wiederholt, indem die mechanische Drehzahl des Rotors (N') um eine vorbestimmte Spanne (k) bis zum Stillstand des Rotors verringert wird.

6. Verfahren zum automatischen Einstellen eines Winkelpositionssensors (2) gemäß einem der Ansprüche 1 bis 2, bei dem sich die elektrische Maschine im Leerlauf drehen kann, beispielsweise durch Auskuppeln von einer Turbomaschinenwelle, wobei das Verfahren umfasst:

- in dem Schritt des Berechnens eines Befehls für den Wechselrichter (2E) des Abschnitts zur Fehlererkennung des Positionssensors durch die Drehzahl (E1) wird die vorbestimmte mechanische Drehzahl (N) jedes Mal, wenn das Verfahren den Abschnitt der Fehlererkennung des Positionssensors durch die Drehzahl (E1) wiederholt, um einen vorbestimmten Wert erhöht,
- im Abschnitt zur Fehlererkennung des Positionssensors durch die Drehzahl (E1) einen Schritt zum Speichern jedes Winkelabweichungswerts (Δθ) zwischen dem Wert des Sollwinkels (θcontrol) und dem gemessenen Winkel (θcapteur).

7. Verfahren zum automatischen Einstellen eines Winkelpositionssensors einer mehrphasigen elektrischen Maschine gemäß Anspruch 6, das nach dem Abschnitt des Kalibrierens des Positionssensors durch die Drehzahl (E1) zusätzlich einen Abschnitt zur Überprüfung der Einstellung des Winkelpositionssensors (2) durch den Strom (E2) umfasst, der die folgenden Schritte umfasst:

- Berechnen (6E) eines Befehls für den Wechselrichter (C) zur Versorgung der X Phasen, um den induzierten Rotor mit einer zweiten vorbestimmten mechanischen Drehzahl (Ni) konstant drehen zu lassen,
- Messen der Ströme (iu, Iv, Iw) der Phasen und deren Transformation in einem Park-Koordinatensystem als quadratischen Rückstrom (Iq) und als direkten Rückstrom (Id), wobei der Wert des Sollwinkels (θcontrol) berücksichtigt wird,
- Berechnen einer elektrischen Drehzahl des Rotors (w_elec), indem die Anzahl (P) der Polpaare mit der zweiten vorbestimmten mechanischen Drehzahl (Ni) multipliziert wird,
- dem vorbestimmten mechanischen Drehzahlwert (Ni) am Eingang eines Stromreglers (4) einen quadratischen Sollstrom (Iq#) mit einem ersten vorbestimmten Wert (Ik) ungleich Null und einen Durchlassstromsollwert (Id#) mit dem Wert Null vorschreiben (7E),
- Bestimmen der quadratischen Induktivität (Lq),
- mit der zweiten vorbestimmten mechanischen Drehzahl konstant vergleichen (8E), dass am Ausgang des Stromreglers (4) der Wert der vorgegebenen Direktspannung (Vd') einem Wert mit umgekehrtem Vorzeichen entspricht, wobei der Wert dem Produkt aus der berechneten elektrischen Drehzahl (*w_elec*), der quadratischen Induktivität (Lq) und dem quadratischen Rückstrom (Iq) entspricht,
- mit der zweiten vorbestimmten mechanischen Drehzahl konstant vergleichen (8E), dass am Ausgang des Stromreglers (4) der Wert der vorgegebenen quadratischen Spannung (Vq') gleich dem Produkt aus der berechneten elektrischen Drehzahl (*w_elec*) und dem vorbestimmten Wert ($\varphi_f$) ist, der dem Fluss der Rotormagnete entspricht,
- Berechnen (9E) der Winkeldifferenz ($\Delta\theta$) zwischen dem Sollwinkel (*θcontrol*) und dem gemessenen Winkel (*θcapteur*), während sich der Rotor mit der zweiten vorbestimmten mechanischen Drehzahl ($N_i$) konstant dreht, in Abhängigkeit von diesen Vergleichen und die Differenz speichern,

wobei der automatische Einstellvorgang den Abschnitt der Überprüfung der Einstellung des Winkelpositionssensors (2) durch den Strom (E2) eine vorbestimmte Anzahl N von Malen wiederholt, wobei jedes Mal der vorbestimmte Wert (Ik) des quadratischen Sollstroms (Iq#) in vorbestimmter Weise erhöht wird, bis ein vorbestimmter maximaler quadratischer Rückstromwert (Iqmax) erreicht ist.

8. Verfahren zur Steuerung einer elektrischen Maschine einer Turbomaschine, bei dem bei jedem Start der elektrischen Maschine das Verfahren das Verfahren zum automatischen Einstellen eines Winkelpositionssensors (2) gemäß einem der vorhergehenden Ansprüche umfasst und bei dem das Verfahren außerdem einen normalen Steuerungsmodus des Elektromotors (1) umfasst, umfassend:

- Einen Schritt zur Berechnung der Steuerung des Wechselrichters (C) zur Versorgung der Phasen des Stators des Elektromotors (1) gemäß dem Sollwert (I#), der aus den Werten des quadratischen Rückstroms (Iq) und des direkten Rückstroms (Id) empfangen wird, wobei die Berechnungseinheit (5) die Berechnungen nach der mathematischen Methode der direkten oder inversen Park-Transformation unter Verwendung eines Winkels B durchführt, der den gemessenen Winkel (*θcapteur*) zuzüglich eines Korrekturwerts gemäß einer gespeicherten Winkeldifferenz ($\Delta\theta$) umfasst.

9. Verfahren zur Steuerung einer Turbomaschine mit einer elektrischen Maschine gemäß dem vorhergehenden Anspruch, bei dem der Korrekturwert gleich dem berechneten, gespeicherten Winkelabweichungswert (*Δθ*) sein kann, der der gespeicherten Drehzahl (Nn), die der gemessenen momentanen mechanischen Drehzahl (N) am nächsten liegt, entspricht.

10. Verfahren zur Steuerung einer Turbomaschine mit einer elektrischen Maschine gemäß Anspruch 8, das außerdem einen Schritt zum Berechnen eines Mittelwerts (*Δθmoy*) der gespeicherten Winkelabweichungswerte (*Δθ*) umfasst, und bei dem der Korrekturwert gleich dem Mittelwert (*Δθmoy*) der gespeicherten Winkelabweichungswerte (*Δθ*) ist.

11. Regelkreis (R) einer elektrischen Maschine (M) einer Turbomaschine zur Berechnung einer Wechselrichtersteuerung (C) für einen Elektromotor (1) mit einem Induktionsstator mit Statorwicklungen, die X Phasen bilden, einem induzierten Magnetrotor mit p Polpaaren und einer Welle zum Koppeln mit einem Turbomaschinenkörper, einem Wechselrichter (C) mit einem Steuereingang und Ausgängen, die jeweils mit einer der X Phasen (u, v, w) verbunden sind, um den Elektromotor (1) zu steuern, einem Mittel (3) zum Messen des auf die X Phasen (u, v, w) gelieferten Stroms und einem Positionssensor (2) mit einem drehbaren Teil, der fest mit der Rotorwelle verbunden ist, und einem festen Teil, das fest mit dem Stator verbunden ist, wobei der Regelkreis (R) so konfiguriert ist, dass er das Verfahren zur Steuerung einer Turbomaschine mit einer elektrischen Maschine gemäß einem der Ansprüche 8 bis 10 zur Berechnung einer Steuerung (PWM) des Wechselrichters (C) ausführt, wobei der Regelkreis (R) umfasst:

1. einen Stromregler (4) mit:

a. einem Eingang für den Sollwert für direkte und quadratische Ströme,
b. einem Rückstromeingang für quadratischen und direkten Strom,
c. einem Ausgang für den Spannungssollwert,

2. eine Berechnungseinheit (5) zur Durchführung einer Park- und inversen Park-Transformation, umfassend:

a. einen Eingang für den Sollwert für direkte und quadratische Spannung, der mit dem Ausgang für den Spannungssollwert des Stromreglers (4) verbunden ist,
b. einen Eingang für den gemessenen Strom, der mit dem Messmittel (3) verbunden ist,

c. einen Eingang für die angepasste Winkelposition,
d. einen Stromrückkopplungsausgang zum Ausgeben eines quadratischen Rückkopplungsstroms (Iq) und eines direkten Rückkopplungsstroms (Id), wobei der Stromrückkopplungsausgang mit dem Rückkopplungseingang des Stromreglers (4) verbunden ist,
e. einen Steuerausgang, der mit dem Steuereingang des Wechselrichters (C) verbunden ist,

3. einen Winkelfehlerkompensator (6), umfassend:

a. einen Messeingang, der mit dem Winkelmesssensor (3) verbunden ist,
b. einen Stromrückkopplungseingang, der mit dem Stromrückkopplungsausgang der Recheneinheit (5) verbunden ist, um den quadratischen Rückkopplungsstrom (Iq) und den direkten Rückkopplungsstrom (id) zu empfangen,
c. einen Eingang für den Spannungssollwert, der mit dem Ausgang für den Spannungssollwert des Reglers (42) verbunden ist, um die direkte und quadratische Sollspannung (Vd', Vq') zu empfangen,
d. einen Ausgang für den angepassten Winkel, der mit dem Eingang der angepassten Winkelposition der Recheneinheit (5) verbunden ist, wobei der Regelkreis durch den Winkelfehlerkompensator gekennzeichnet ist, der umfasst:
e. einen Rechner für die angepasste Winkelposition (62), der so gestaltet ist, dass er:

○ einen Winkelabweichungswert ($\Delta\theta$) in Abhängigkeit von den Strommessungen und dem Spannungs- und Drehzahlsollwert des Rotors berechnet, um einerseits den Winkelabweichungsfehler auf der direkten Achse und andererseits den Winkelabweichungsfehler auf der quadratischen Achse zu ermitteln,
○ anhand des Winkelabweichungswerts ($\Delta\theta$) einen Sollwinkel ($\theta$control) berechnet.

12. Elektrische Maschine (M) mit dem Rotor, dem Stator, dem Positionssensor (2) und dem Wechselrichter (C) mit einem Steuereingang und Ausgängen, die jeweils mit einer der X Phasen verbunden sind, um den Elektromotor (1) und den Regelkreis (R) gemäß dem vorherigen Anspruch zu steuern.

**Claims**

1. A method for automatically setting an angular position sensor (2) measuring an angle corresponding to the mechanical angular position of an armature rotor with a magnet forming P pole pairs relative to a stator comprising X phases of a multiphase synchronous electric motor (1) of an electric machine (M) of an aircraft propulsion unit, the position sensor (2) comprising a movable part mounted to the armature rotor and a fixed part relative to the stator, the method using a control loop (R) to transmit a command (PWM) to an inverter converter (C) of the electric machine (M) to supply the phases of the stator, the control loop (R) comprising a current controller (4) comprising a setpoint input to receive a current setpoint (I#) comprising a setpoint quadrature current (Iq#) corresponding to a component on the quadrature axis of the setpoint current vector and a setpoint direct current (Id#) corresponding to a component on the direct axis of the setpoint current vector, to deliver a voltage setpoint (V') comprising a quadrature (Vq') and direct (Vd') voltage with an angle (a), a calculation unit (5) to calculate a direct Park and inverse Park transformation, for transforming the voltage setpoint (V') into a command (PWM) of the inverter converter (C), an angle error compensator (6) to identify an angle error and compensate for it, the method being **characterised in that** it comprises a speed-based position sensor error identification part (E1, E1'), comprising the following steps of:

- calculating (2E, 1E') the command (PWM) of the inverter converter (C) in order to rotate the armature rotor at a predetermined mechanical speed ($N_n$) constantly,
- measuring the phase currents (Iu, Iv, Iw) and transforming them in a Park reference frame, into the return quadrature current (Iq) and the return direct current (Id), taking account of an adjusted angle ($\theta$control) calculated,
- calculating an electrical speed ($\omega_{elec}$) of the rotor by multiplying the number p of pole pairs by the predetermined mechanical speed (Nn),
- calculating (2E, 1E') a voltage setpoint (V') for a period t during which the rotor rotates at the predetermined mechanical speed ($N_n$) by imposing a direct current value equal to 0 on the current controller,
- identifying an offset error of the direct component ($\varepsilon_d$) on its direct axis by comparing (3E, 3E') during the period t the direct voltage (Vd') of the voltage setpoint (V') with a value of opposite sign, the value being equal to the electrical speed ($\omega_{elec}$) calculated multiplied by a quadrature inductance (Lq) multiplied by the return quadrature current (Iq), and is **characterized by** the steps :

- identifying an offset error of the quadrature component ($\varepsilon_q$) on its quadrature axis by comparing, during the period t, the quadrature voltage (Vq') of the voltage setpoint (V') with a first value equal to the electrical speed of the rotor ($\omega_{elec}$) calculated multiplied by a predetermined value ($\varphi_f$) corresponding to the flux of the rotor magnets,
- calculating (4E, 4E') an angular difference value ($\Delta\theta$) from these direct and quadrature angular offset errors identified,
- determining (5E, 5E') at the period t, an adjusted angle ($\theta$control) as a function of the angular difference value ($\Delta\theta$) calculated, and the measured angle value ($\theta$sensor),
- transmitting the return quadrature current (Iq) and the return direct current (Id) according to the adjusted angle ($\theta$control) to the current controller (4).

2. The method for automatically setting an angular position sensor (2) according to the preceding claim, wherein calculating the angular difference value ($\Delta\theta$) is made according to this formula:

-

$$\Delta\theta = \frac{1}{2}\left[\left(k_p + \frac{k_i}{s}\right)\varepsilon_d + \left(k_p + \frac{k_i}{s}\right)\varepsilon_q\right]$$

- with $\varepsilon_d = \omega_{elec}L_q i_q + V_{d'}$ corresponding to the comparison to identify the angular error of the direct component and $\varepsilon_q = -\omega_{elec}\varphi_f + V_{q'}$ corresponding to the comparison to identify the angular error of the quadrature component, Lq is the quadrature inductance, $k_p$, $k_i$ are the gains of the proportional integral type corrector used to cancel the error between respectively the setpoint quadrature current (Iq#) and the return quadrature current (Iq) and respectively the setpoint direct current (Id#) and the return direct current (Id).

3. The method for automatically setting an angular position sensor (2) according to one of the preceding claims, wherein the rotor is coupled to a shaft of the propulsion unit comprising a moment of inertia, wherein during the period t, the value of the direct voltage (Vd') is imposed to be equal to 0.

4. The method for automatically setting an angular position sensor (2) according to one of the preceding claims, wherein the rotor is coupled to a body of a turbomachine, and in that the speed-based position sensor (2) calibration part (E1') is started again a number X times at different predetermined speeds and in that each time a speed-based position sensor calibration part is carried out, the value of the angular

difference ($\Delta\theta$) between the adjusted angle ($\theta$control) and the measured angle ($\theta$sensor) and the corresponding predetermined mechanical speed (N') are recorded.

5. The method for automatically setting an angular position sensor (2) according to claim 4, wherein the first predetermined mechanical speed (N'1) is the highest of the predetermined speeds (Nmax), for example the maximum speed of rotation of the rotor, and in that the method repeats the speed-based position sensor calibration part (E1') by decreasing the mechanical speed of the rotor (N') by a predetermined difference (k) until the rotor stops rotating.

6. The method for automatically setting an angular position sensor (2) according to one of claims 1 to 2, wherein the electric machine can run idle, for example by disengaging from a turbomachine shaft, the method comprising:

   - in the step of calculating a command of the inverter converter (2E) of the speed-based position sensor error identification part (E1), the predetermined mechanical speed of rotation (N) is incremented in a predetermined manner each time the method starts again the speed-based position sensor error identification part (E1),
   - in the speed-based position sensor error identification part (E1), a step of recording each angular difference value ($\Delta\theta$) between the adjusted angle value ($\theta$control) calculated and the measured angle ($\theta$sensor).

7. The method for automatically setting an angular position sensor of a multiphase electric machine according to claim 6, further comprising after the speed-based position sensor calibration part (E1) a current-based angular position sensor (2) setting checking part (E2) comprising the following steps of:

   ◦ calculating (6E) a command of the inverter converter (C) to supply the X phases in order to rotate the armature rotor at a second predetermined mechanical speed (Ni) constantly,
   ◦ measuring the currents (iu, Iv, Iw) of the phases and transform them in a Park reference frame, into the return quadrature current (Iq) and the return direct current (Id), taking account of the value of the adjusted angle ($\theta$control) calculated,
   ◦ calculating an electrical rotor speed (w_elec) by multiplying the number (P) of pole pairs by the second predetermined mechanical speed (Ni),
   ◦ imposing (7E) on the predetermined mechanical speed (Ni), at the input of a current controller (4), a setpoint quadrature current (Iq#) to a first predetermined value (Ik) other than zero, and a setpoint direct current (Id#) to a zero value,
∘ determining the quadrature inductance (Lq),
∘ comparing (8E) at the second predetermined mechanical speed constantly, that at the output of the current controller (4), the value of the direct setpoint voltage (Vd') is equal to a value of opposite sign, the value being equal to the product of the electrical speed (ω_elec) calculated, the quadrature inductance (Lq) and the quadrature return current (Iq),
∘ comparing (8E) at the second predetermined mechanical speed constantly, that at the output of the current controller (4), the value of the setpoint quadrature voltage (Vq') is equal to the product of the electrical speed (ω_elec) calculated times the predetermined value ($\varphi_f$) corresponding to the flux of the rotor magnets,
∘ calculating (9E) the angular difference (Δθ) between the adjusted angle (θcontrol) calculated and the measured angle (θsensor), while the rotor rotates at the second predetermined mechanical speed (Ni) constantly according to these comparisons, and recording it,
- wherein the automatic setting method repeats a predetermined number N of times the current-based angular position sensor (2) setting checking part (E2), each time incrementing the predetermined value (Ik) of the setpoint quadrature current (Iq#) in a predetermined manner until a predetermined maximum return quadrature current value (Iqmax) is obtained.

8. A method for commanding an electric machine of a turbomachine, wherein, each time the electric machine is started up, the method comprises the method for automatically setting an angular position sensor (2) according to any one of the preceding claims, and wherein the method further comprises a normal mode of commanding the electric motor (1) comprising a step of

- calculating the command of the inverter converter (C) for supplying the phases of the stator of the electric motor (1) according to the setpoint (I#) received from the values of return quadrature current (Iq) and return direct current (Id), the calculation unit (5) performing the calculations by the mathematical method of the direct or inverse Park transform, according to an angle B comprising the measured angle (θsensor) added to a correction value according to a recorded angular difference (Δθ).

9. The method for commanding a turbomachine comprising an electric machine, according to the preceding claim, wherein the correction value may be equal to the recorded angular difference value (Δθ) calculated corresponding to the recorded mechanical predetermined speed (Nn) closest to the mechanical instantaneous speed (N) measured.

10. The method for commanding a turbomachine comprising an electric machine, according to claim 8, further comprising a step of calculating a mean (Δθmean) of the recorded angular difference values (Δθ) and wherein the correction value is equal to the mean (Δθmean) of the recorded angular difference values (Δθ).

11. A control loop (R) of an electric machine (M) of a turbomachine to calculate a command of an inverter converter (C) for an electric motor (1) comprising a field stator having stator coilings forming X phases, an armature rotor with a magnet having p pole pairs and a shaft to be coupled to a turbomachine body, an inverter converter (C) comprising a command input and outputs each connected to one of the X phases (u, v, w) to command the electric motor (1), a measuring means (3) of the current delivered on the X phases (u, v, w) and a position sensor (2) comprising a rotatably movable part mounted integral with the rotor shaft and a fixed part integral with the stator, the control loop (R) being configured to carry out the method for commanding a turbomachine comprising an electric machine, according to one of claims 8 to 10, in order to calculate a command (PWM) of the inverter converter (C), the control loop (R) comprising:

1. a current controller (4) comprising:

a. a direct and quadrature current setpoint input,
b. a quadrature and direct current return input,
c. a voltage setpoint output,

2. a calculation unit (5) for performing a Park and an inverse Park transformation comprising:

a. a direct and quadrature voltage setpoint input, connected to the voltage setpoint output of the current controller (4),
b. a measured current input, connected to the measurement means (3),
c. an adjusted angular position input,
d. a current return output to output a return quadrature current (Iq) and a return direct current (Id), the current return output being connected to the return input of the current controller (4),
e. a command output to be connected to the command input of the inverter converter (C),

3. an angle error compensator (6), comprising:

a. a measurement input to be connected to the angle measurement sensor (2),
b. a current return input, connected to the current return output of the calculation unit (5) to receive the return quadrature current (Iq) and the return direct current (id),
c. a voltage setpoint input connected to the voltage setpoint output of the controller (42) to receive the direct and quadrature setpoint voltage (Vd', Vq'),
d. an adjusted angle output connected to the adjusted angular position input of the calculation unit (5),

the control loop (R) being **characterized by**
4. the angle error compensator (6) comprising an adjusted angle calculator (62) configured to:

a. calculate an angular difference value ($\Delta\theta$) as a function of the current measurements and the voltage setpoint and rotor speed, to identify on the one hand the angular error on the direct axis and on the other hand the angular error on the quadrature axis,
b. calculate an adjusted angle ($\theta$control) from the angular difference value ($\Delta\theta$).

**12.** An electric machine (M) comprising the rotor, the stator, the position sensor (2) and the inverter converter (C) comprising a command input and outputs each connected to one of the X phases for commanding the electric motor (1) and the control loop (R) according to the preceding claim.

[Fig. 1]

[Fig. 2]

[Fig. 3]

[Fig. 4]

[Fig. 5]

**EP 4 423 900 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011144457 A1